# EUROPEAN PATENT APPLICATION

(11) **EP 4 845 106 A1**
(43) Date of publication of application: **25.11.2026**
(21) Application number: 25751441.4
(22) Date of filing: 27.01.2025
(51) Int. Cl.: H04L 25/02, H04W 12/02

(54) **COMMUNICATION METHOD AND APPARATUS**

(30) Priority: 08.02.2024 CN 202410179409
(71) Applicant: Huawei Technologies Co., Ltd., Shenzhen, Guangdong 518129 (CN)
(72) Inventor: LEI, Ao, Shenzhen, Guangdong 518129 (CN); WU, Yizhuang, Shenzhen, Guangdong 518129 (CN); YING, Jiangwei, Shenzhen, Guangdong 518129 (CN)
(74) Representative: Pfenning, Meinig & Partner mbB
(86) International application number: PCT/CN2025/075497
(87) International publication number: WO 2025/167841

(57) **Abstract**

A communication method and apparatus are provided, to properly select a transmitter of a sensing signal. The method may include: A sensing device receives a sensing request, where the sensing request is used to request a first sensing service; and the sensing device determines, based on positioning permission of a first terminal and/or a sensing role indication of the first terminal, that the first terminal serves as a transmitter of a sensing signal of the first sensing service, where the positioning permission of the first terminal is used to determine that location information of the first terminal is allowed to be obtained, and the sensing role indication indicates that the first terminal is allowed to serve as the transmitter of the sensing signal.

## Description

### CROSS-REFERENCE TO RELATED APPLICATIONS

This application claims priority to Chinese Patent Application No. 202410179409.8, filed with the China National Intellectual Property Administration on February 8, 2024 and entitled "COMMUNICATION METHOD AND APPARATUS", which is incorporated herein by reference in its entirety.

### TECHNICAL FIELD

This application relates to the field of mobile communication technologies, and in particular, to a communication method and apparatus.

### BACKGROUND

With development of the 5th generation (the 5th generation, 5G) network, requirements for new sensing-based network capabilities are gradually emerging. For example, in scenarios such as a smart city and smart transportation, requirements for obtaining relative locations and angles between objects and sensing information such as a location, a speed, and a shape of a target object gradually emerge. For a movable target object, a sensing signal may be sent through a sensing node having a sensing capability, and the target object may be sensed by measuring the sensing signal.

How to select a proper transmitter of the sensing signal is a problem that needs to be resolved currently.

### SUMMARY

This application provides a communication method and apparatus, to properly select a transmitter of a sensing signal.

According to a first aspect, a communication method is provided. The method may be performed by a first communication apparatus. The first communication apparatus may be a sensing device or a component in a sensing device. The sensing device may be a sensing network element or a terminal device. The sensing network element may be a sensing function (sensing function, SF), an SF-control plane (SF-control plane, SF-C), or an SF-user plane (SF-user plane, SF-U), or may be a sensing server. The component in this application may include, for example, at least one of a chip, a chip system, a processor, a transceiver, a processing unit, or a transceiver unit. For example, the method is performed by the sensing device. The method may be implemented by using the following steps: The sensing device receives a sensing request, where the sensing request is used to request a first sensing service; and the sensing device determines, based on positioning permission of a first terminal and/or a sensing role indication of the first terminal, that the first terminal serves as a transmitter of a sensing signal of the first sensing service, where the positioning permission of the first terminal is used to determine that location information of the first terminal is allowed to be obtained, and the sensing role indication indicates that the first terminal is allowed to serve as the transmitter of the sensing signal.

According to the method shown in the first aspect, the sensing device may properly determine the transmitter of the sensing signal based on the positioning permission of the first terminal and/or the sensing role indication of the first terminal, that is, determine, as the transmitter of the sensing signal, the first terminal whose location information is allowed to be obtained and/or the first terminal that is allowed to serve as the transmitter of the sensing signal. In this way, the determined transmitter of the sensing signal sends the sensing signal. Even if location information of the transmitter is calculated by a malicious sensing signal receiver, there is no problem of privacy leakage. In other words, a security risk caused by randomly determining the transmitter is avoided. For example, a terminal device whose location information is not allowed to be obtained serves as the transmitter of the sensing signal. As a result, after the transmitter sends the sensing signal, location information of the terminal device is calculated by a malicious sensing signal receiver, and a problem of privacy leakage occurs.

It may be understood that the sensing device determines, based on the positioning permission of the first terminal and/or the sensing role indication of the first terminal, that the first terminal serves as the transmitter of the sensing signal of the first sensing service is specifically: The sensing device determines, based on the sensing request, that the first terminal (or a plurality of terminal devices including the first terminal device, or an unspecified terminal device) serves as a candidate transmitter of the sensing signal of the first sensing service, and then determines, based on the positioning permission of the first terminal and/or the sensing role indication of the first terminal, that the first terminal serves as the transmitter of the sensing signal of the first sensing service. To be specific, whether the first terminal can serve as the transmitter is checked based on the positioning permission of the first terminal and/or the sensing role indication of the first terminal.

In this application, the first terminal may be a terminal device that meets a requirement of the first sensing service, that is, the first terminal allows or supports execution of the first sensing service. A sensing capability of the first terminal may support the first terminal in serving as the transmitter of the sensing signal. In addition, the positioning permission of the first terminal is used to determine that the location information of the first terminal is allowed to be obtained, and/or the sensing role indication of the first terminal indicates that the first terminal is allowed to serve as the transmitter of the sensing signal. A sequence in which the sensing device determines that the first terminal meets the requirement of the first sensing service, the sensing device determines that the sensing capability of the first terminal supports the first terminal in serving as the transmitter of the sensing signal, and the sensing device obtains the positioning permission and/or the sensing role indication of the first terminal is not limited in this application.

In a possible implementation, the sensing device may further send a sensing control request to the first terminal, where the sensing control request indicates to send the sensing signal of the first sensing service.

Based on this implementation, when the sensing device is a device other than the sensing network element or the first terminal, the sensing device may trigger, by using the sensing control request, the first terminal to send the sensing signal.

In a possible implementation, the method further includes: The sensing device sends the sensing signal of the first sensing service.

Based on this implementation, when the sensing device is the first terminal, the first terminal may send the sensing signal after determining that the first terminal can serve as the transmitter of the sensing signal of the first sensing service.

In a possible implementation, before determining, based on the positioning permission of the first terminal, that the first terminal serves as the transmitter of the sensing signal of the first sensing service, the method further includes: The sensing device determines a sensing mode based on the sensing request, where the sensing mode is that the sensing signal is sent via a terminal.

Based on this implementation, when determining that the sensing mode is sending the sensing signal via the terminal, the sensing device may perform the method shown in this application.

In a possible implementation, the method further includes: The sensing device obtains the positioning permission of the first terminal. The positioning permission of the first terminal includes at least one of the following: a feedback of a positioning notification, where the positioning notification is used to request the first terminal or a user of the first terminal to reply that the location information is agreed or not agreed to be obtained; positioning permission subscribed by the first terminal; and indication information indicating that the location information of the first terminal is allowed to be obtained, where the indication information is determined based on the positioning permission subscribed by the first terminal and/or the feedback of the positioning notification.

Based on this implementation, the positioning permission of the terminal device may include at least one of the feedback of the positioning notification, the positioning permission subscribed by the terminal, and the indication information indicating that the location information of the terminal is allowed or not allowed to be obtained, so that the transmitter of the sensing signal can be properly determined.

In a possible implementation, the positioning permission of the first terminal includes the indication information, and a manner in which the sensing device obtains the indication information includes: The sensing device obtains the positioning permission subscribed by the first terminal and/or the feedback of the positioning notification; and the sensing device determines the indication information based on the positioning permission subscribed by the first terminal and/or the feedback of the positioning notification.

In a possible implementation, the positioning permission of the first terminal includes the feedback of the positioning notification, the positioning permission of the first terminal includes the feedback of the positioning notification, and obtaining the feedback of the positioning notification includes: The sensing device sends the positioning notification, and further obtains the feedback of the positioning notification based on a first response message of the positioning notification. The feedback of the positioning notification may be determined based on the first response message, or may be included in the first response message.

In a possible implementation, sending the positioning notification includes: The sensing network element sends the positioning notification to the first terminal via an access and mobility management network element (for example, an AMF); and the access and mobility management network element may receive the positioning notification from the SF, and send the positioning notification to the first terminal.

Further, the first terminal may receive the positioning notification. The first terminal may trigger a feedback request for the positioning notification based on the positioning notification, where the feedback request for the positioning notification is used to request the user to reply that the location information is agreed or not agreed to be obtained. The first terminal may further obtain an operation feedback for the feedback request for triggering the positioning notification or obtain no operation feedback from the user, and send a second response message to the access and mobility management network element based on the operation feedback or the no operation feedback from the user. The access and mobility management network element may further send the second response message based on the second response message or based on a case in which the second response message of the positioning notification is not received within predetermined time. The second response message indicates that the first terminal or the user of the first terminal replies that the location information is agreed to be obtained, the first terminal or the user of the first terminal replies that the location information is not agreed to be obtained, or the user has no operation feedback. The sensing network element may further receive the first response message from the access and mobility management network element. The first response may indicate that the first terminal or the user of the first terminal replies that the location information is agreed to be obtained, the first terminal or the user of the first terminal replies that the location information is not agreed to be obtained, the user has no operation feedback, or the first terminal does not reply to the positioning notification.

If the sensing device is the sensing network element, the sensing network element may send, via the access and mobility management network element, the positioning notification to the terminal device based on an identifier of an access and mobility management network element to which the terminal device belongs. The terminal device may trigger, based on the positioning notification, the feedback request for the positioning notification, to request the user to reply that the location information is agreed or not agreed to be obtained. The terminal device may obtain the second response message of the positioning notification based on the operation feedback of the user, and feed back the second response message to the access and mobility management network element. The access and mobility management network element may further determine the first response message of the positioning notification based on the second response message, and send the first response message to the sensing network element, so that the sensing network element can determine the feedback of the positioning notification based on the first response message. The sensing network element may obtain an association relationship between the terminal device and the access and mobility management network element. For example, the sensing network element may obtain a correspondence between the identifier of the access and mobility management network element and an identifier of the terminal device in a process of reporting sensing capability of the terminal device. For another example, the sensing network element may obtain, from a data management function network element, the correspondence between the identifier of the access and mobility management network element and the identifier of the terminal device.

In addition, when there is an interface between the sensing network element and an access network device, the sensing network element may send the positioning notification to the terminal device via the access network device in which the terminal device is located. The access network device may send the positioning notification to the terminal device. The terminal device may determine, based on the positioning notification, the operation feedback of the positioning notification or that the user has no operation feedback, to determine the response message. The response message indicates that the first terminal or the user of the first terminal replies that the location information is agreed to be obtained, the first terminal or the user of the first terminal replies that the location information is not agreed to be obtained, or the user has no operation feedback. The terminal device may further provide a response message to the sensing network element, and the sensing network element may determine the feedback of the positioning notification based on the response message of the positioning notification.

In a possible implementation, the positioning permission of the first terminal includes the positioning permission subscribed by the first terminal, and obtaining positioning permission of at least one terminal includes: obtaining, from the data management function network element, the positioning permission subscribed by the first terminal.

For example, obtaining, from the data management function network element, the positioning permission subscribed by the first terminal may include: The sensing network element sends an identifier of the first terminal to the data management function network element, for example, the identifier of the first terminal is included in a request for obtaining the subscribed positioning permission; after receiving the request, the data management function network element may determine, based on the identifier of the first terminal, the positioning permission subscribed by the first terminal; and the data management function network element may further send the positioning permission subscribed by the first terminal, and receive the positioning permission subscribed by the first terminal from the data management function network element. When there are a plurality of terminal devices, the sensing network element may send identifiers of the plurality of terminal devices through one request, and/or receive positioning permission subscribed by the plurality of terminal devices provided by the data management function network element through one piece of signaling, thereby saving signaling.

In a possible implementation, the method further includes: The sensing device obtains sensing capability information of the first terminal from the first terminal; and determines, based on the sensing capability information, that the first terminal supports serving as the transmitter of the sensing signal. That the terminal device supports serving as the transmitter of the sensing signal may be used as a condition for the sensing device to determine to trigger execution of the method shown in this application, or used as a condition for triggering obtaining of the positioning permission subscribed by the terminal device, or used as a condition for triggering obtaining of the feedback of the positioning notification in this application. That is, the sensing device may perform the method shown in this application when learning that the terminal device can support serving as the transmitter of the sensing signal.

In a possible implementation, if the sensing device is the first terminal, the positioning permission of the first terminal includes the feedback of the positioning notification, and obtaining the positioning permission of the first terminal includes: The first terminal triggers the positioning notification; and the first terminal may further obtain the operation feedback for the positioning notification, and determine the feedback of the positioning notification based on the operation feedback.

In a possible implementation, the sensing device may obtain the sensing role indication from the first terminal. The sensing device may receive the sensing role indication from the access and mobility management network element.

For example, the sensing role indication may be included in the sensing capability reported by the first terminal. The sensing capability information may be reported by the first terminal to the sensing network element via the access and mobility management network element. The sensing capability information may be included in a registration request sent by the first terminal to the access and mobility management network element. The sensing capability information may be included in a sensing registration request sent by the access and mobility management network element to the sensing device.

In a possible implementation, determining, based on the positioning permission of the first terminal and/or the sensing role indication of the first terminal, that the first terminal serves as the transmitter of the sensing signal of the first sensing service includes: determining, from a plurality of second terminals based on positioning permission of the plurality of second terminals and/or sensing role indications of the plurality of second terminals, that the first terminal serves as the transmitter of the sensing signal of the first sensing service, where the positioning permission of the second terminal indicates that the location information is allowed or not allowed to be obtained, and the sensing role indication of the second terminal indicates that the second terminal is allowed or not allowed to serve as the transmitter of the sensing signal. Based on this implementation, the positioning permission of the first terminal and/or the sensing role indication of the first terminal may be used by the sensing device to determine the first terminal from the plurality of second terminals. Therefore, a terminal that is suitable for serving as the transmitter of the sensing signal of the first sensing service can be further determined, and the transmitter of the sensing signal can be properly determined.

In a possible implementation, the positioning permission of the first terminal corresponds to a location and/or time; and determining that the first terminal serves as the transmitter of the sensing signal of the first sensing service further includes: The sensing device determines that the first terminal serves as the transmitter of the sensing signal of the first sensing service based on information about the location of the first terminal and/or information about the time of the sensing request. Based on this implementation, the sensing device may further properly determine the transmitter of the sensing signal based on the location and/or time corresponding to the positioning permission of the terminal device. For example, it is determined, based on the location of the terminal device and/or the time corresponding to the sensing request, that a terminal device that is allowed to serve as the transmitter of the sensing signal at the location and/or the time information is the terminal device that is allowed to serve as the transmitter of the sensing signal of the first sensing service.

According to a second aspect, a communication method is provided. The method may be performed by a second communication apparatus. The second communication apparatus may be a terminal device (for example, including a first terminal) or a component in a terminal device. The component in this application may include, for example, at least one of a chip, a chip system, a processor, a transceiver, a processing unit, or a transceiver unit. For example, the method is performed by the first terminal. The method may be implemented by using the following steps: The first terminal receives a positioning notification, where the positioning notification is used to request the first terminal or a user of the first terminal to reply that location information is agreed or not agreed to be obtained; the first terminal may further trigger a feedback request for the positioning notification based on the positioning notification, where the feedback request for the positioning notification is used to request the user to reply that the location information is agreed or not agreed to be obtained; and the first terminal may further send a response message based on an operation feedback of the user on the feedback request for the positioning notification or no operation feedback of the user, where the response message indicates that the first terminal or the user replies that the location information is agreed to be obtained, the first terminal or the user replies that the location information is not agreed to be obtained, or the user has no operation feedback.

For beneficial effects of the technical solution shown in the second aspect and the possible implementations of the second aspect, refer to the descriptions of the beneficial effects of the first aspect and the corresponding technical solutions of the first aspect.

According to a third aspect, a communication method is provided. The method may be performed by a second communication apparatus. The second communication apparatus may be a terminal device (for example, including a first terminal) or a component in a terminal device. The component in this application may include, for example, at least one of a chip, a chip system, a processor, a transceiver, a processing unit, or a transceiver unit. For example, the method is performed by the terminal device. The method may be implemented by using the following steps: The terminal device obtains a sensing role indication, where the sensing role indication indicates that the first terminal is allowed to serve as a transmitter of a sensing signal; and the terminal device sends the sensing role indication.

The terminal device may include the first terminal that serves as a transmitter of a sensing signal of a first sensing service.

In a possible implementation, the terminal device may further trigger a sensing role request, where the sensing role request is used to request a user to reply that the first terminal is agreed to serve as the transmitter of the sensing signal; and the terminal device may further obtain an operation feedback of the sensing role request, and determine the sensing role indication based on the operation feedback.

In a possible implementation, the sensing role indication is carried in a registration request of the terminal.

For beneficial effects of the technical solution shown in the third aspect and the possible implementations of the third aspect, refer to the descriptions of the beneficial effects of the first aspect and the corresponding technical solutions of the first aspect.

According to a fourth aspect, a communication apparatus is provided. The apparatus may implement the method according to any one of the first aspect to the third aspect and any possible implementation of the first aspect to the third aspect. The apparatus has a function of the first communication apparatus or the second communication apparatus. The apparatus is, for example, a terminal device, a functional module in the terminal device, a network device, or a functional module in the network device.

In an optional implementation, the apparatus may include modules that are in one-to-one correspondence with the methods/operations/steps/actions according to any one of the first aspect to the third aspect and any possible implementation thereof. The modules may be implemented by using a hardware circuit, software, or a combination of a hardware circuit and software. In an optional implementation, the apparatus includes a processing unit (sometimes also referred to as a processing module) and a communication unit (sometimes also referred to as a transceiver module, a communication module, or the like). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

For example, when the apparatus is configured to perform the method described in any one of the first aspect to the third aspect, the apparatus may include a communication unit and a processing unit.

According to a fifth aspect, an embodiment of this application further provides a communication apparatus, including a processor, configured to execute a computer program (or computer-executable instructions) stored in a memory. When the computer program (or the computer-executable instructions) is executed, the apparatus is enabled to perform the method according to any one of the first aspect to the third aspect and the possible implementations thereof.

In a possible implementation, the processor and the memory are integrated together.

In another possible implementation, the memory is located outside the communication apparatus.

The communication apparatus further includes a communication interface. The communication interface is for communication between the communication apparatus and another device, for example, for data and/or signal sending or receiving. For example, the communication interface may be a transceiver, a circuit, a bus, a module, or another type of communication interface.

According to a sixth aspect, a computer-readable storage medium is provided. The computer-readable storage medium is configured to store a computer program or instructions. When the computer program or the instructions are run, the method according to any one of the first aspect to the third aspect and any possible implementation of the method according to any one of the first aspect to the third aspect is implemented.

According to a seventh aspect, a computer program product including instructions is provided. When the computer program product runs on a computer, the method according to any one of the first aspect to the third aspect or the possible implementations of the first aspect to the third aspect is implemented.

According to an eighth aspect, an embodiment of this application further provides a communication apparatus, configured to perform the method according to any one of the first aspect to the third aspect and any possible implementation of the first aspect to the third aspect.

According to a ninth aspect, a chip system is provided. The chip system includes a logic circuit (which may alternatively be understood as that the chip system includes a processor, and the processor may include the logic circuit, and the like), and may further include an input/output interface. The input/output interface may be configured to input a message, or may be configured to output a message. The input/output interface may be a same interface. To be specific, the same interface can implement both a sending function and a receiving function. Alternatively, the input/output interface includes an input interface and an output interface. The input interface is configured to implement a receiving function, in other words, configured to receive a message. The output interface is configured to implement a sending function, in other words, configured to send a message. The logic circuit may be configured to perform operations other than a transceiver function in the method according to any one of the first aspect to the third aspect and any possible implementation of the first aspect to the third aspect. The logic circuit may be further configured to transmit a message to the input/output interface, or receive a message from another communication apparatus from the input/output interface. The chip system may be configured to implement the method according to any one of the first aspect to the third aspect and any possible implementation of the first aspect to the third aspect. The chip system may include a chip, or may include a chip and another discrete component.

Optionally, the chip system may further include a memory, and the memory may be configured to store instructions. The logic circuit may invoke the instructions stored in the memory to implement a corresponding function.

According to a tenth aspect, a communication method is provided. The communication method may include the method implemented by the first communication apparatus according to any one of the first aspect and the possible implementations of the first aspect, and include the method implemented by the second communication apparatus according to any one of the second aspect or the third aspect and the possible implementations of the second aspect or the third aspect.

According to an eleventh aspect, a communication system is provided. The communication system may include a first communication apparatus and a second communication apparatus. The first communication apparatus may be configured to implement the method according to any one of the first aspect and the possible implementations of the first aspect, and the second communication apparatus may be configured to implement the method according to any one of the second aspect or the third aspect and the possible implementations of the second aspect or the third aspect.

For technical effects brought by the second aspect to the eleventh aspect, refer to the descriptions of the beneficial effects of the corresponding solutions in the first aspect. Details are not described herein again.

### BRIEF DESCRIPTION OF DRAWINGS

FIG. 1A and FIG. 1B each are a diagram of an architecture of a wireless communication system according to an embodiment of this application;
FIG. 2 is a diagram of an architecture of another wireless communication system according to an embodiment of this application;
FIG. 3A and FIG. 3B are a diagram of a sensing node according to an embodiment of this application;
FIG. 4 is a diagram of a sensing scenario according to an embodiment of this application;
FIG. 5 is a schematic flowchart of a communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a schematic flowchart of another communication method according to an embodiment of this application;
FIG. 9 is a schematic flowchart of another communication method according to an embodiment of this application;
FIG. 10 is a schematic flowchart of another communication method according to an embodiment of this application;
FIG. 11 is a schematic flowchart of another communication method according to an embodiment of this application;
FIG. 12 is a diagram of a structure of a communication apparatus according to an embodiment of this application; and
FIG. 13 is a diagram of a structure of another communication apparatus according to an embodiment of this application.

### DESCRIPTION OF EMBODIMENTS

For ease of understanding, a network architecture applicable to the methods provided in embodiments of this application is first described in more detail with reference to the accompanying drawings.

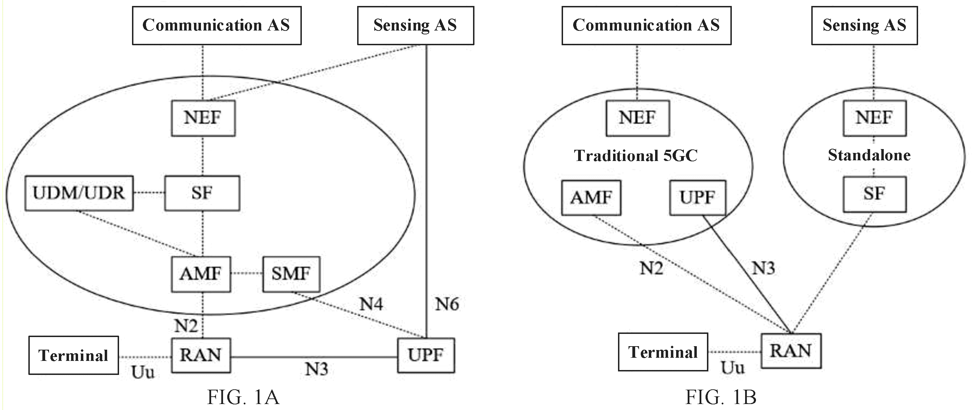

FIG. 1A and FIG. 1B respectively show two possible architectures in a 5G network: an integrated architecture (refer to FIG. 1A) and a standalone architecture (refer to FIG. 1B). A difference between the integrated architecture and the standalone architecture lies in a deployment location of an SF dedicated for a sensing service.

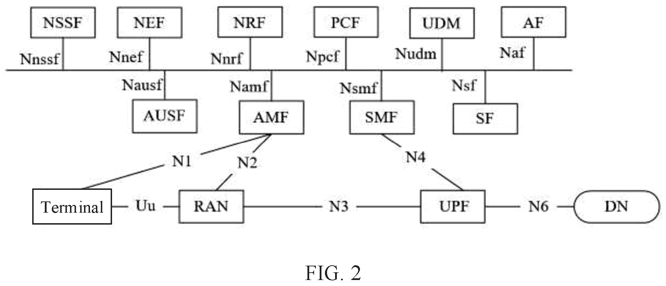

As shown in FIG. 1A, in the integrated architecture, the SF may be deployed in a conventional 5G core network (5G core network, 5GC), and interacts with another network element through a service-based architecture (service-based architecture, SBA) interface. For more detailed descriptions of the SBA, refer to FIG. 2. Details are not described herein. The SF may interact with a server outside the 5GC via an NEF, for example, receive a sensing request message from the external server. A RAN device like a base station may send received sensing data to the SF for processing through a user plane.

As shown in FIG. 1B, in the standalone architecture, the SF may be deployed outside the conventional 5GC, and the SF cannot interact with another network element through the SBA interface, and may need to interact with another 5GC network element via an NEF (for example, an NEF 1 in the figure). The SF may alternatively interact with an external server via the NEF, or the SF may directly interact with the external server without forwarding via the NEF. In addition, the SF may interact with the RAN device, and further, may interact with a terminal device via the RAN device.

It should be understood that the two possible architectures respectively shown in FIG. 1A and FIG. 1B are merely examples of a 5GC architecture, and should not constitute any limitation on this application. The methods provided in this application are not limited to being used in the two architectures shown in FIG. 1A and FIG. 1B.

FIG. 2 is a diagram of an SBA network architecture in a 5G network according to an embodiment of this application. As shown in FIG. 2, the 5G network architecture may include three parts: a terminal, a data network (data network, DN), and an operator network.

The following briefly describes network elements involved in FIG. 1A and FIG. 1B, and FIG. 2.

The terminal may also be referred to as user equipment (user equipment, UE), an access terminal, a subscriber unit, a subscriber station, a mobile station, a mobile console, a remote station, a remote terminal, a mobile device, a user terminal, a terminal device, a wireless communication device, a user agent, or a user apparatus.

The terminal is a device that has a wireless transceiver function. The terminal may communicate with one or more core network (core network, CN) devices (or referred to as core devices) via an access network device (or referred to as an access device) in a radio access network. The terminal device may be deployed on land, including an indoor device, an outdoor device, a handheld device, or a vehicle-mounted device; may be deployed on a water surface (for example, on a ship); or may be deployed in the air (for example, on an aircraft, a balloon, or a satellite).

The terminal may alternatively be a terminal in an internet of things (internet of things, IoT) system, or may be referred to as an IoT node. The IoT is an important part in future development of information technology. A main technical feature of the IoT is to connect things to a network by using a communication technology, to implement an intelligent network for human-machine interconnection and thing-thing interconnection. The connection may be implemented by using a broadband technology or a narrowband (narrowband, NB) technology. The IoT technology can implement massive connections, deep coverage, and terminal power saving by using, for example, a narrowband technology.

In embodiments of this application, an apparatus configured to implement a function of the terminal may be a terminal, or may be an apparatus that can support the terminal in implementing the function, for example, a chip system. The apparatus may be installed in the terminal or used together with the terminal. In embodiments of this application, the chip system may include a chip, or may include a chip and another discrete component. In embodiments of this application, an example in which the apparatus configured to implement the function of the terminal is the terminal is merely used for description, and this constitutes no limitation on the solutions in embodiments of this application.

The terminal in this application may be a hardware device, or may be a software function running on dedicated hardware, or may be a software function running on general-purpose hardware, or may be a virtualized device, for example, implemented by using general-purpose hardware and an instantiated virtualization function, or implemented by using dedicated hardware and an instantiated virtualization function. The general-purpose hardware may be a server, for example, a cloud server.

The operator network may include one or more of the following network elements: an authentication server function (authentication server function, AUSF) network element, a network exposure function (network exposure function, NEF) network element, a policy control function (policy control function, PCF) network element, a unified data management (unified data management, UDM) network element, a network repository function (network repository function, NRF) network element, an application function (application function, AF) network element, an access and mobility management function (access and mobility management function, AMF) network element, a session management function (session management function, SMF) network element, a user plane function (user plane function, UPF) network element, a network slice selection function (network slice selection function, NSSF) network element, an access network (access network, AN) (for example, a radio access network (radio access network, RAN) network element), and the like. In the foregoing operator network, a part other than the RAN network element may be referred to as a core network part. For ease of description, the word "network element" is omitted below. For example, the AF network element is referred to as an AF for short, the UDM network element is referred to as a UDM for short, and the SF network element is referred to as the SF for short.

The RAN is a network including a plurality of RAN nodes, and implements a radio physical layer function, a resource scheduling function, a radio resource management function, a radio access control function, and a mobility management function. The 5G-RAN may be connected to the user plane function (user plane function, UPF) through a user plane interface N3, to transmit data of the terminal device. The 5G-RAN establishes a control plane signaling connection to the access and mobility management function (access and mobility management function, AMF) through a control plane interface N2, to implement functions such as radio access bearer control.

The RAN node may provide a wireless communication function service, and connect the terminal to a wireless network. The RAN node may also be referred to as a RAN device, an access network device, or the like.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation NodeB in a 6th generation (6th generation, 6G) mobile communication system, a base station in a future mobile communication system. The RAN node may be a macro base station, a micro base station, an indoor base station, a relay node, or a donor node, or may be a radio controller in a cloud radio access network (cloud radio access network, CRAN) scenario. Optionally, the RAN node may alternatively be a server.

In another possible scenario, a plurality of RAN nodes coordinate to assist the terminal in implementing radio access, and different RAN nodes respectively implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). A network device in a vehicle-to-everything (vehicle-to-everything, V2X) technology may be a road side unit (road side unit, RSU).

In different systems, the CU (or the CU-CP and the CU-UP), the DU, or the RU may also have different names, but a person skilled in the art may understand meanings thereof. For example, in an open access network (open RAN, O-RAN or ORAN) system, the CU may also be referred to as an open CU (O-CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for descriptions in this application. Any one of the CU (or the CU-CP or the CU-UP), the DU, and the RU in this application may be implemented via a software module, a hardware module, or a combination of a software module and a hardware module.

In embodiments of this application, the apparatus configured to implement a function of the RAN node may be the RAN node, or may be an apparatus that can support the RAN node in implementing the function, for example, a chip system, a hardware circuit, a software module, or a hardware circuit and a software module. The apparatus may be installed in the RAN node or used together with the RAN node. In embodiments of this application, an example in which the apparatus configured to implement the function of the RAN node is the RAN node is merely used for description, and this constitutes no limitation on the solutions in embodiments of this application.

The RAN node in this application may be a hardware device, or may be a software function running on dedicated hardware, or may be a software function running on general-purpose hardware, or may be a virtualized device, for example, implemented by using general-purpose hardware and an instantiated virtualization function, or implemented by using dedicated hardware and an instantiated virtualization function. The general-purpose hardware may be a server, for example, a cloud server.

The SF is mainly responsible for related processing of the sensing service, for example, determining a sensing result based on the obtained sensing data, for example, whether a person intrudes, or calculating a distance, a direction, a location, and the like of a surrounding reflective object in a sensing area.

The AMF is mainly responsible for functions such as terminal authentication, terminal mobility management (mobility management, MM), network slice selection, and SMF selection. The AMF serves as an anchor for N1 and N2 signaling connection, provides routing of N1/N2 session management (session management, SM) messages for the SMF, and maintains and manages status information of the terminal.

The SMF is mainly responsible for all control plane functions of terminal session management, including UPF selection, internet protocol (internet protocol, IP) address allocation, quality of service (quality of service, QoS) management of a session, and PCC (policy and charging control) policy obtaining (from a PCF).

As an anchor point of a protocol data unit (protocol data unit, PDU) session connection, the UPF is responsible for data packet filtering, data transmission/forwarding, rate control, charging information generation, and the like of the terminal.

The UDR is mainly configured to store user data, including subscription data invoked by the UDM, policy information invoked by the PCF, structured data used for capability exposure, application data invoked by the NEF, and the like.

The UDM is mainly configured to manage and control user data, for example, subscription information management, including obtaining subscription information from the UDR and providing the subscription information to another network element (for example, the AMF); generating a 3GPP authentication credential for the terminal; and registering and maintaining a network element currently serving the terminal (for example, an AMF represented by an AMF ID 1 is a current serving AMF of the terminal, that is, a serving AMF).

The NEF is configured to connect another internal network element of the core network to interact with an application function (application function, AF) network element corresponding to an external application server (application server, AS) of the core network, so as to provide a network exposure capability for the AF, or provide information provided by the AF for a core network element.

An AUSF authentication server function is used to perform security authentication on a terminal when the terminal accesses a network.

The PCF mainly performs policy control on a quality of service (quality of service, QoS) policy and a charging (charging) policy, and the like. The PCF provides configuration policy information for the terminal, and provides policy information for a control plane network element (for example, the AMF or the SMF) of a network to manage and control the terminal.

The AF mainly transfers requirements of an application side for a network side, and may be considered as an application server or an agent of the application server. The AF may interact with the core network element to provide some services, for example, interact with the PCF to perform service policy control, interact with the NEF to obtain some network capability information or provide some application information for the network, and provide some data network access point information for the PCF to generate routing information of a corresponding data service.

The DN mainly provides a service for a user.

Network elements communicate with each other through interfaces. For example, an interface between the terminal and the AMF is an N1 interface, an interface between the AN and the AMF is an N2 interface, an interface between the AN and the UPF is an N3 interface, an interface between the SMF and the UPF is an N4 interface, and an interface between the UPF and the DN is an N6 interface. Some network elements may communicate with each other through a service-based interface. Nnssf, Nnef, Nnrf, Npcf, Nudm, Naf, Nusf, Namf, Npcf, and Nsf in FIG. 1A and FIG. 1B are service-based interfaces. The interface Nsf is merely a possible name, and a name of a service-based interface corresponding to the SF is not limited in this application.

The foregoing network elements in the core network and the interfaces between the network elements are merely examples for description, and shall not constitute any limitation on this application. In addition, the network elements shown in the figure may be understood as network elements configured to implement different functions in the core network, for example, may be combined into a network slice as required. These core network elements may be independent devices, or may be integrated into a same device to implement different functions. A specific form of the foregoing network elements is not limited in this application.

It may be understood that a network element used in the future communication system may be the foregoing network elements, or may be a network element with another name having a same or similar function. This is not limited in this application.

In embodiments of this application, the apparatus configured to implement the functions of the core network may be a core network element corresponding to each function, or may be an apparatus that can support a core network element in implementing each function, for example, a chip system, a hardware circuit, a software module, or a hardware circuit and a software module. The apparatus may be installed in the core network element or used together with the core network element. In embodiments of this application, an example in which the apparatus configured to implement a core network function is the core network element is merely used for description. This constitutes no limitation on the solutions in embodiments of this application.

The core network element in this application may be a hardware device, or may be a software function running on dedicated hardware, or may be a software function running on general-purpose hardware, or may be a virtualized device, for example, implemented by using general-purpose hardware and an instantiated virtualization function, or implemented by using dedicated hardware and an instantiated virtualization function. The general-purpose hardware may be a server, for example, a cloud server.

Currently, some base stations or terminals in the RAN have a sensing capability brought by an electromagnetic wave, and may be used as sensing nodes. The implementation of sensing is similar to that of radar. To be specific, a transmitter (or referred to as a transmit machine, that is, a sensing node) transmits an electromagnetic wave (that is, a sensing signal), and the electromagnetic wave is reflected by an object that needs to be sensed and then obtained by a receiver. The receiver (or referred to as a receive machine, that is, a sensing node) may further process the obtained reflected signal (which may be referred to as original sensing data) to obtain sensing data, where the sensing data may be used to obtain a sensing result. In this application, "sending" may refer to sending through an interface (for example, an air interface or a communication interface) between devices, or may refer to sending through an interface (for example, an interface circuit) between components within a same device. For example, "sending" may also be replaced with "output". In addition, "receiving" may refer to receiving through an interface between devices, or may refer to receiving through an interface between components within a same device. For example, "receiving" may also be replaced with "input".

It may be understood that the base station and the terminal are used as examples of the sensing node herein. In another example, the sensing node may alternatively include another form of network device, communication apparatus, or network apparatus. This is not specifically limited in this application.

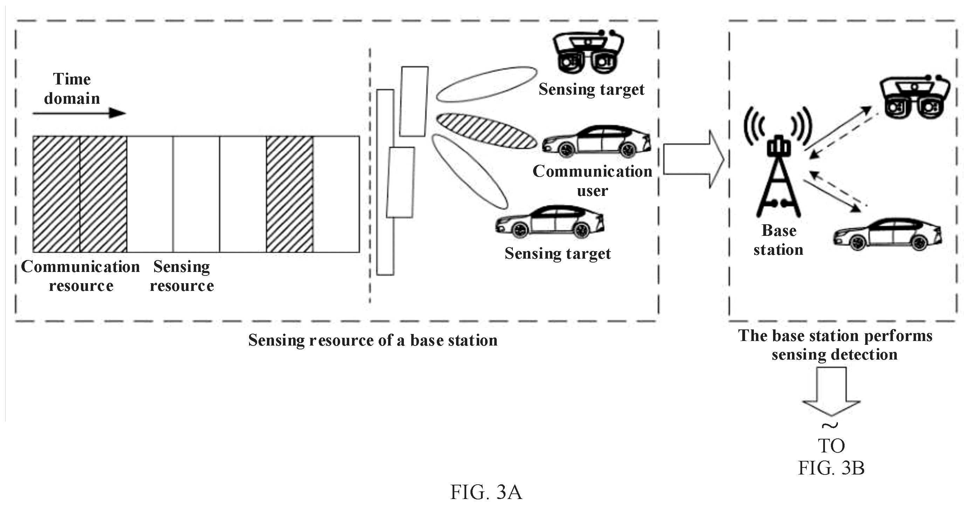

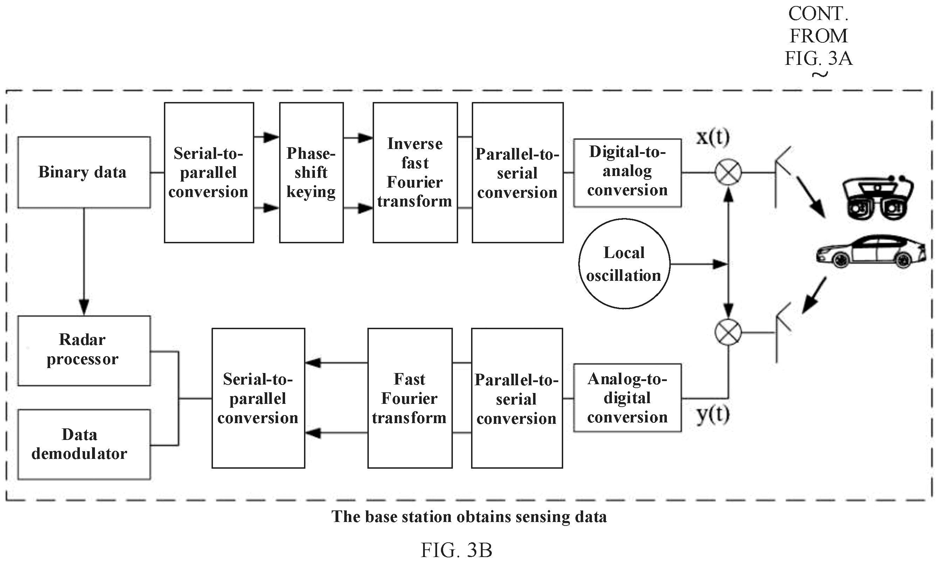

For example, when a base station is used as a sensing node, the base station has functions shown in Table A and FIG. 3A and FIG. 3B. Table A is an example of sensing capabilities of a speed measurement radar, a surveillance radar, and an imaging radar.

**Table A**

| Sensing capability | Specification parameter | Distance resolution | Angular resolution | Sensing usage |
|---|---|---|---|---|
| Speed measurement radar | 1 transmit (transmit, T) 1 receive (receive, R) (1T1R) and 20 MHz (mega hertz, MHz) bandwidth | 7.5 m (m) | Not applicable (not applicable, N/A) | Speed measurement and photographing triggering |
| Surveillance radar | 2T8R and 200 MHz bandwidth | 0.75 m | 6 degrees | Object check, lane counting, and coarse-granularity classification of moving targets (accuracy: 70%) |
| Imaging radar | 12T16R and 1 GHz (gigahertz, GHz) bandwidth | 0.15 m | 2 degrees | Refined classification of moving objects (accuracy: 90%) and three-dimensional point cloud imaging |

FIG. 3A and FIG. 3B are a diagram of performing a sensing operation by a base station. FIG. 3A and FIG. 3B are an example of integrated sensing and communication (integrated sensing and communication, ISAC). The base station shown in FIG. 3A and FIG. 3B may reuse an electromagnetic wave signal of a communication system to perform sensing. As shown in the figure, a resource used by the base station for communication and a resource used by the base station for sensing may be time-division multiplexed (as shown in FIG. 3A and FIG. 3B), or may be spatial-division multiplexed. The base station may perform sensing detection by using the electromagnetic wave signal; and may also receive a signal that is transmitted back after reaching an obstacle (namely, a detected target object) (which may be referred to as a reflected signal or an echo signal for short), and obtain sensing data based on the echo signal. As shown in FIG. 3A and

FIG. 3B, the base station may perform serial-to-parallel conversion, phase-shift keying, inverse fast Fourier transform (inverse fast Fourier transform, IFFT), parallel-to-serial conversion, digital-to-analog conversion, and the like on a to-be-sent signal, and the base station may also perform analog-to-digital conversion, parallel-to-serial conversion, fast Fourier transform (fast Fourier transform), serial-to-parallel conversion, demodulation, and the like on the received echo signal. The to-be-sent signal may be further sent to a radar processor, so that the radar processor obtains the sensing data based on the to-be-sent signal and the received echo signal (it may be understood that the echo signal herein is an echo signal obtained through the foregoing processing). It should be understood that processing performed by the base station on the to-be-sent signal and the received echo signal shown in FIG. 3A and FIG. 3B is merely an example, and should not constitute any limitation on this application.

A sensing node in a communication system may perform sensing and recognition on a specified area, a specified object, or an event, to meet sensing requirements in a plurality of aspects such as autonomous driving, safety supervision, home health, and meteorological monitoring. Specific examples are provided as follows.

### 1. Autonomous driving

In a V2X scenario and an uncrewed aerial vehicle (uncrewed aerial vehicle, UAV) scenario, for example, because a sensing distance of a vehicle or an uncrewed aerial vehicle is short or a non-line-of-sight (non-line-of-sight, NLOS) path cannot be sensed, a dynamic map may be generated based on sensing data. For another example, in a traveling process of a vehicle or an uncrewed aerial vehicle, there may be a traffic hazard event like a sudden appearance of a pedestrian, a non-motor vehicle, or the like, or a pedestrian, a non-motor vehicle, or the like in a blind spot, the hazard event may be recognized based on sensing data, and the vehicle or the uncrewed aerial vehicle may be notified to perform an emergency operation. For still another example, for autonomous driving assistance of a vehicle or an uncrewed aerial vehicle, a customized high-definition dynamic map is generated based on sensing data to assist the vehicle or the uncrewed aerial vehicle in autonomous driving.

### 2. Security supervision

In the V2X scenario and the uncrewed aerial vehicle scenario, driving violation of the vehicle or the uncrewed aerial vehicle, for example, the vehicle occupying an emergency lane or the uncrewed aerial vehicle leaving an airway for driving, may be recognized based on sensing data, and a real-time alarm may be issued.

In a perimeter security protection scenario, a case like an intrusion of a foreign object into a railway track or an intrusion of the uncrewed aerial vehicle into a no-fly zone (for example, an airport) may be detected based on sensing data, a violation object may be detected, and real-time emergency processing may be performed.

### 3. Family health

For example, an abnormal posture may be recognized based on sensing data, so that a case like a fall can be recognized, and an alarm can be issued in time. For another example, a physiological parameter like a human breath or a heartbeat can be obtained based on sensing data, so that an anomaly can be recognized, and an alarm can be issued in time.

### 4. Meteorological monitoring

An environment, a climate, a weather change, and the like may be sensed and predicted.

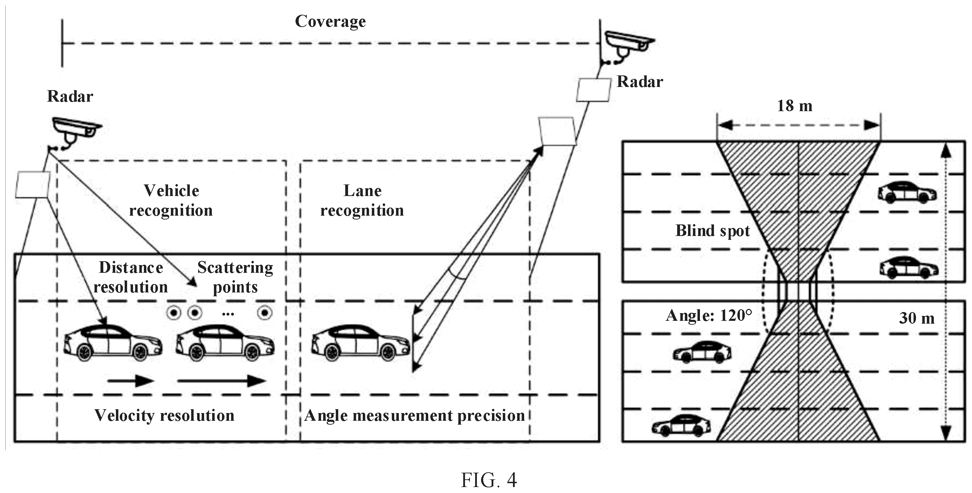

FIG. 4 is a diagram of parameters that affect sensing precision and resolution. FIG. 4 uses an internet of vehicles scenario as an example, and shows several parameters that affect sensing positioning precision (including vertical and horizontal), sensing velocity precision (including vertical and horizontal), and sensing resolution (including area and velocity) in KPIs that affect sensing.
1. Distance resolution α: a capability to distinguish between adjacent targets in terms of distance, which is usually measured by a minimum resolvable distance interval, and is for recognizing different vehicles.
2. Velocity resolution β: a capability of distinguishing targets in terms of a radial velocity.
3. Angle measurement precision θ: a capability of a radar to distinguish adjacent objects in terms of angle, which is usually measured by minimum resolvable angle.
4. Horizontal field of view (field of view, FOV): An FOV shown in FIG. 4 is 120°. In the FOV of 120°, a bidirectional blind spot range is less than 18 meters when a bidirectional vehicle road width is 30 meters, and a blind spot proportion is less than 1%.

Currently, the sensing node may include a terminal device or a base station (the base station may alternatively be replaced with another device, for example, a road side unit (RSU)). A transmitter of a sensing signal may be a terminal device or a base station, and a receiver of the sensing signal may also be a terminal device or a base station. In view of this, the sensing service may include the following sensing modes: a sensing mode A, where a transmitter of a sensing signal is a terminal device a, and a receiver of the sensing signal is a terminal device b; a sensing mode B, where both a transmitter and a receiver of a sensing signal are a terminal device a; a sensing mode C, where a transmitter of a sensing signal is a terminal device, and a receiver of the sensing signal is a base station; a sensing mode D, where a transmitter of a sensing signal is a base station a, and a receiver of the sensing signal is a base station b; a sensing mode E, where both a transmitter and a receiver of a sensing signal are a base station a; and a sensing mode F, where a transmitter of a sensing signal is a base station, and a receiver of the sensing signal is a terminal device.

In each of the sensing mode A, the sensing mode B, and the sensing mode C, the transmitter of the sensing signal is a terminal device. In each of the sensing mode D, the sensing mode E, and the sensing mode F, the transmitter of the sensing signal is a base station.

In conclusion, in the sensing service, the sensing node may perform sensing measurement based on the sensing signal to obtain sensing data. A transmitter of the sensing signal may be a terminal device, a base station, or the like. This is not specifically limited. Currently, a manner of selecting the transmitter of the sensing signal needs to be improved, to properly determine the transmitter.

For example, the receiver of the sensing signal is capable of obtaining location information of the transmitter through direct or indirect calculation. The location information of the terminal device is privacy information. If the terminal device is selected as the transmitter of the sensing signal on the premise that the terminal device (and a user of the terminal device) does not agree or authorize that the location information of the terminal device can be obtained by another device, there is a risk of privacy leakage.

This application provides a communication method, to properly determine the transmitter of the sensing signal. The communication method may be performed by a sensing network element and a terminal device. The sensing device may be configured to determine the transmitter of the sensing signal. For example, the sensing network element may be an SF network element. For another example, in an architecture in which the SF uses a control plane-user plane separation architecture, the sensing network element may include an SF-control plane (SF-control plane, SF-C) network element and/or an SF-user plane (SF-user plane, SF-U) network element. In addition, the method may also be applied to another device that can be used to determine the transmitter of the sensing signal, for example, a sensing server, an AS, an AF, a cloud platform, or an edge platform. This is not specifically limited. For ease of description, the sensing network element, the terminal device, or another device may be referred to as a sensing device in the following.

In addition, the communication method shown in this application may alternatively be performed by a functional module, a chip, a circuit, or another component in the sensing device. In other words, actions performed by the sensing device, the sensing network element, the terminal device, or another device in the following may be replaced with actions performed by a component in a corresponding device.

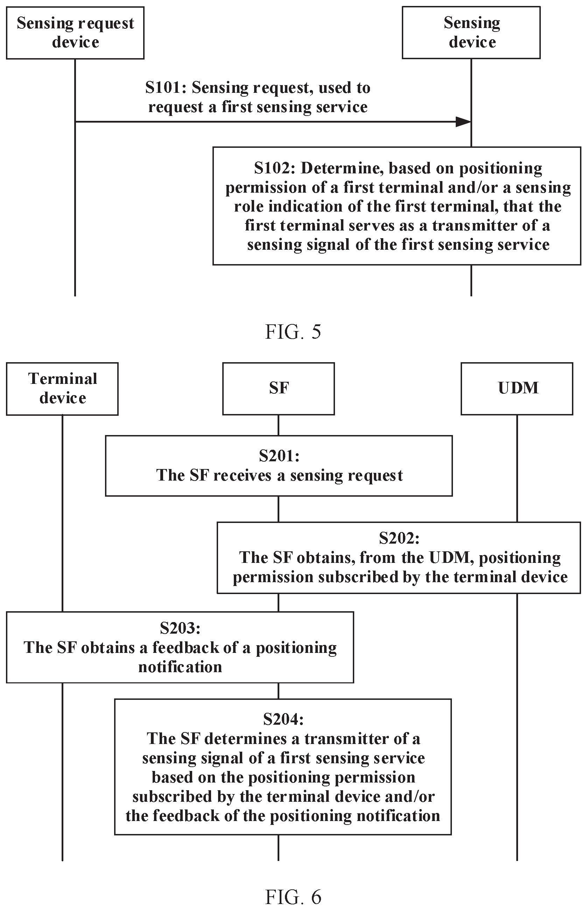

As shown in FIG. 5, an example in which the communication method is performed by a sensing device is used. The communication method provided in embodiments of this application includes the following steps.

S101: A sensing device receives a sensing request. The sensing request is used to request a first sensing service.

The sensing request may be used to trigger the first sensing service. For example, the sensing device may trigger, based on the received sensing request, determining of a transmitter of a sensing signal. If the sensing device is a sensing network element, the sensing device may determine, based on the sensing request, a terminal or a base station that serves as the transmitter of the sensing signal. If the sensing device is a terminal device, the terminal device may determine, based on the sensing request, whether the terminal device can serve as the transmitter of the sensing signal. In other words, the terminal device that receives the sensing request may be a first terminal in the following.

In this application, the sensing device determines, based on the sensing request, that the terminal device serves as the transmitter of the sensing signal. In other words, a sensing mode of the first sensing service may be that the terminal device serves as the transmitter of the sensing signal. Specifically, the sensing device may determine, based on the sensing request, that the sensing mode of the first sensing service is that the terminal device serves as the transmitter of the sensing signal, or the sensing device may determine, based on the sensing request, the transmitter of the sensing signal, where the transmitter of the sensing signal is the terminal device. In this case, the sensing device may not determine the transmitter of the sensing signal after determining the mode of the first sensing service, but directly select a specific node from nodes that are allowed to serve as the transmitter of the sensing signal to send the sensing signal of the first sensing service. The nodes that are allowed to serve as the transmitter of the sensing signal include an access network device and/or a terminal device, and the specific node is the terminal device.

For example, the sensing request may include an indication of the sensing mode (for example, indicating that the sensing mode is the sensing mode A, the sensing mode B, and/or the sensing mode C) or type information of the transmitter of the sensing signal (for example, indicating that the type is the terminal device). For another example, the sensing device determines a used sensing mode based on a service scenario of the first sensing service. The service scenario may be intrusion detection, vehicle traffic detection, gesture recognition, or the like. The service scenario and a manner of determining the sensing mode based on the service scenario are not limited in this application.

The sensing request may come from a sensing request device. The sensing request device may be a device that initiates a sensing service, or may be from another network element related to the sensing service, for example, an NEF. The device that initiates the sensing service may be a network device (for example, an NEF or an AF) or a terminal device. It should be noted that when the sensing request is from the terminal device, the sensing request may be from an application (application, APP) on the terminal device.

It may be understood that the sensing mode of the first sensing service is that the terminal device serves as the transmitter of the sensing signal, and may be used as a precondition for performing S102. In other words, S102 is performed when it is determined that the sensing mode of the first sensing service is that the terminal device serves as the transmitter of the sensing signal. In other words, if the sensing mode of the first sensing service is not that the terminal device serves as the transmitter of the sensing signal, S102 is ignored or S102 is not performed.

S102: The sensing device determines, based on positioning permission of the first terminal and/or a sensing role indication of the first terminal, that the first terminal serves as the transmitter of the sensing signal of the first sensing service.

In S102, the positioning permission of the first terminal is used to determine that location information of the first terminal is allowed to be obtained. In this application, the positioning permission of the terminal may indicate that the location information of the terminal is allowed or not allowed to be obtained. In other words, the positioning permission of the terminal may be used to determine that the location information of the terminal is allowed or not allowed to be obtained.

The sensing role indication of the first terminal indicates that the first terminal is allowed to serve as the transmitter of the sensing signal. In this application, the sensing role indication of the terminal may indicate that the terminal is allowed or not allowed to serve as the transmitter of the sensing signal. In other words, the sensing role indication of the terminal may be used to determine that the terminal is allowed or not allowed to serve as the transmitter of the sensing signal.

In this application, when the positioning permission of the first terminal is used to determine that the location information of the first terminal is allowed to be obtained, and/or the sensing role indication of the first terminal is used to determine that the first terminal is allowed to serve as the transmitter of the sensing signal, the first terminal may be determined as the transmitter of the sensing signal of the first sensing service. In other words, the first terminal whose location information is allowed to be obtained and/or the first terminal allowed to serve as the transmitter of the sensing signal are/is determined as the transmitter of the sensing signal. In this way, the determined transmitter of the sensing signal sends the sensing signal. Even if the location information of the transmitter is calculated by a malicious sensing signal receiver, there is no problem of privacy leakage. In other words, a security risk caused by randomly determining the transmitter is avoided. For example, a terminal device whose location information is not allowed to be obtained serves as the transmitter of the sensing signal. As a result, after the transmitter sends the sensing signal, location information of the terminal device is calculated by a malicious sensing signal receiver, and a problem of privacy leakage occurs.

Based on S102, the sensing device may determine, based on the positioning permission and/or the sensing role indication of the terminal device, that the terminal serves as the transmitter of the sensing signal. The transmitter of the sensing signal may be configured to send the sensing signal of the first sensing service, and the sensing signal may be used to obtain sensing data related to the first sensing service.

In this application, the first terminal may be a terminal device that meets a requirement of the first sensing service, that is, the first terminal allows or supports execution of the first sensing service. A sensing capability of the first terminal may support the first terminal in serving as the transmitter of the sensing signal. In addition, the positioning permission of the first terminal is used to determine that the location information of the first terminal is allowed to be obtained, and/or the sensing role indication of the first terminal indicates that the first terminal is allowed to serve as the transmitter of the sensing signal. A sequence in which the sensing device determines to perform the following actions is not limited in this application: The sensing device determines that the first terminal meets the requirement of the first sensing service; the sensing device determines that the sensing capability of the first terminal supports the first terminal in serving as the transmitter of the sensing signal; the sensing device obtains the positioning permission of the first terminal; and the sensing device obtains the sensing role indication of the first terminal.

In an example, after determining that the first terminal meets the requirement of the first sensing service, the sensing device may perform at least one of the following: determining that the sensing capability of the first terminal supports the first terminal in serving as the transmitter of the sensing signal; obtaining the positioning permission of the first terminal; and obtaining the sensing role indication of the first terminal.

In addition, the sensing network element may determine a plurality of terminals (for example, referred to as second terminals) based on the sensing request in S101, and select, from the plurality of second terminals based on positioning permission and/or sensing role indications of the plurality of second terminals in S102, the first terminal as the transmitter of the sensing signal. The second terminal includes the first terminal, and the first terminal may be one or more terminals.

For another example, when the first terminal serves as the sensing device, after determining that the first terminal serves as the transmitter of the sensing signal of the first sensing service, the first terminal sends the sensing signal.

The following describes the sensing request in this application.

In S101, the sensing request may be sent by the AF to the NEF, and then sent by the NEF to the sensing network element.

In a possible embodiment, the sensing request sent by the AF to the NEF may include one or more of an AF ID, a service type corresponding to the first sensing service, a service requirement, and area information of the first sensing service. When the first sensing service is triggered by the AF, the AF ID may indicate the AF that triggers the first sensing service. The sensing type may indicate the service type corresponding to (or associated with or belonging to or related to) the sensing service. For example, the sensing service type corresponding to the first sensing service includes services such as intrusion detection or traffic flow monitoring. The service requirement may indicate a requirement of a service corresponding to the first sensing service for a sensing result, for example, requirements for one or more of sensing location precision, sensing speed precision, sensing resolution, and duration required for sensing. The area information of the first sensing service may indicate an area that needs to be sensed, for example, specific location information or a location range.

The area information of the first sensing service in the sensing request may be external area information of an operator network, for example, area information, like geographical coordinates, represented by an external identifier of the operator network. The NEF may determine internal area information of the operator network based on an external identifier. The area information in the sensing request sent by the NEF to the sensing network element may be the internal area information of the operator network. The internal area information of the operator network is, for example, area information represented by an internal area identifier of the operator network. For example, the internal area information of the operator network includes an AMF identifier, a cell identifier, a base station identifier, or the like, and is used to represent an area corresponding to a corresponding ID.

Alternatively, the sensing request may be generated and sent by the NEF based on a request of the AF. For example, the sensing request is determined by the NEF based on a service request from the AF, and the service request may be used to trigger or request a sensing service, and may include one or more of the AF ID, the service type corresponding to the first sensing service, the service requirement, and the area information of the first sensing service.

It should be noted that the AF may send the sensing request to the sensing network element, and does not need to send the sensing request via the NEF. For example, in a service-based architecture, the AF may send the sensing request to the SF through a service-based interface.

Optionally, the sensing request in S101 may alternatively be from the terminal device. Specifically, the sensing request may be from the terminal device or an application on the terminal device. In this case, the sensing device may be specifically a sensing network element or a terminal device.

Before S102, the sensing device may obtain the positioning permission of the terminal device, where the terminal device may include the first terminal. In this application, the positioning permission of the terminal device may include at least one of a feedback of a positioning notification of the terminal device, positioning permission subscribed by the terminal device, or indication information. The following separately describes the feedback of the positioning notification of the terminal device, the positioning permission subscribed by the terminal device, the indication information, and a manner in which the sensing device obtains the positioning permission.

### (1) Feedback of the positioning notification

The feedback of the positioning notification may indicate (or determine or represent) that the location information is agreed or not agreed to be obtained. If the feedback of the positioning notification indicates that the location information is agreed to be obtained, the feedback of the positioning notification may be used to determine that the location information of the first terminal is allowed to be obtained. If the feedback of the positioning notification indicates that the location information is not agreed to be obtained, the feedback of the positioning notification may be used to determine that the location information of the first terminal is not allowed to be obtained.

The positioning notification may be used to request the terminal device or a user of the terminal device to reply that the location information is agreed or not agreed to be obtained. In other words, the feedback may be made by the terminal device or the user of the terminal device.

For example, the sensing device is a sensing network element. The sensing network element may send the positioning notification to the terminal device, and the sensing network element may further determine a feedback of the positioning notification based on a first response message of the received positioning notification. The first response message may indicate (or determine or represent) that the first terminal or a user of the first terminal replies that the location information is agreed to be obtained, the first terminal or the user of the first terminal replies that the location information is not agreed to be obtained, the user has no operation feedback, or the first terminal does not reply to the positioning notification. Optionally, the first response message may be from the terminal device, or may be from an intermediate network element (for example, an AMF), and the intermediate network element may be configured to perform communication between the terminal device and the sensing network element. If the first response message indicates that the location information is agreed, by the first terminal or the user of the first terminal, to be obtained, the feedback of the positioning notification may indicate that the location information is agreed to be obtained. If the first response message indicates that the location information is not agreed, by the first terminal or the user of the first terminal, to be obtained, the feedback of the positioning notification may indicate that the location information is not agreed to be obtained.

In addition, based on the positioning permission subscribed by the terminal device (for example, third subscription positioning information in the following), when the first response message indicates that the user has no operation feedback or the first terminal does not reply to the positioning notification, the sensing device may determine that the location information is agreed or not agreed, by the user, to be obtained. For example, when the location information of the terminal device is not allowed to be obtained without agreement, for example, the third subscription positioning information indicates that the terminal device is not required to feed back agreement, or the third subscription positioning information further indicates that the location information of the terminal device is not allowed to be obtained when the user has no operation feedback, if the first response message indicates that the user has no operation feedback, the feedback of the positioning notification may indicate that the location information is not agreed to be obtained. Alternatively, it may be considered by default that the location information of the terminal device is not allowed to be obtained when the terminal device does not reply to the positioning notification. In this case, the third subscription positioning information does not need to be referred to for decision of the sensing device. When the location information of the terminal device is allowed to be obtained without agreement, for example, the third subscription positioning information indicates that the terminal device is required to feed back agreement, or the third subscription positioning information further indicates that the location information of the terminal device is allowed to be obtained when the user has no operation feedback, if the first response message indicates that the user has no operation feedback, the feedback of the positioning notification may indicate that the location information is agreed to be obtained. That the location information of the terminal device is allowed or not allowed to be obtained without agreement may be determined based on the positioning permission subscribed by the terminal device. For details, refer to the following descriptions of the third subscription positioning information.

In addition, in a specific time period (for example, a predetermined, set, or configured first time period) after the sensing network element sends the positioning notification, if the first response message is not received, the sensing network element may determine that the feedback of the positioning notification indicates that the location information is not agreed to be obtained. Alternatively, when the sensing network element sends the positioning notification to the terminal device via another intermediate network element like the AMF, if a response message (for example, referred to as a second response message) from the terminal device is not received within a specific time period after the intermediate network element sends the positioning notification to the terminal device, the intermediate network element may send, to the sensing network element, the first response message indicating that the first terminal does not reply to the positioning notification. In this case, the sensing network element may determine, based on the feedback of the positioning notification that the terminal device does not respond, that the location information is not agreed to be obtained.

A manner in which the terminal device requests the user to reply that the location information is agreed or not agreed to be obtained, or a manner in which the terminal device obtains the second response message is, for example, the terminal device triggers a feedback request for the positioning notification based on the received positioning notification. The feedback request for the positioning notification is used to request the user to reply that the location information is agreed or not agreed to be obtained. The terminal device may further send the second response message based on an operation feedback of the user for the feedback request for the positioning notification, or based on no operation feedback of the user. The second response message may indicate (or determine or represent) that the terminal device or the user of the terminal device replies that the location information is agreed to be obtained or that the location information is not agreed to be obtained, or the user has no operation feedback. If the user has no operation feedback within a specific time period (for example, a predetermined, set, or configured second time period), the second response message may indicate that the user has no operation feedback. Correspondingly, the first response message may indicate that the user has no operation feedback.

For example, the feedback request for triggering the positioning notification may be triggered in a manner such as the following: The terminal device triggers an operating system (operating system, OS) to display (for example, display or play through a voice) the feedback request for the positioning notification to the user. The operating system may further detect an operation of the user through human machine interaction (human machine interaction, HMI), obtain an operation feedback, and indicate the operation feedback of the user to the terminal device through a location privacy indication (location privacy indication, LPI). For example, the operation feedback may include: The user replies that the location information is agreed to be obtained, the user replies that the location information is not agreed to be obtained, or the user has no operation feedback. The terminal device may determine, based on the operation feedback or based on a case in which no operation feedback is received within a specific time period, to send the second response message. The terminal device may trigger, via the operating system, a display to display text or an image, or trigger a speaker or a headset to play a voice, where the text or the voice may indicate that the user is requested to reply that the location information is agreed or not agreed to be obtained. Optionally, the user may perform an operation feedback via a display, a microphone, or the like, to indicate agreement or disagreement. An operation feedback indicating agreement may be different from an operation feedback indicating disagreement. In addition, if the operating system does not obtain the operation feedback of the user after a period of time, the operating system sends the operation feedback to the terminal device, to indicate that the user does not respond. The operating system of the terminal device may detect the operation feedback of the user, and indicate the operation feedback to the terminal device.

For example, when the terminal device displays, to the user via the display, text corresponding to the feedback request for the positioning notification, the operation feedback made by the user to indicate that the location information is agreed to be obtained is, for example, that the user performs a trigger operation (like tapping, touching, or touching and holding) on a virtual button indicating agreement via the display; and the operation feedback made by the user to indicate that the location information of the terminal device is not agreed to be obtained is, for example, that the user performs a trigger operation on a virtual button indicating disagreement via the display. When a voice corresponding to the positioning notification is played to the user through the microphone, the operation feedback made by the user to indicate that the location information of the terminal device is agreed to be obtained is, for example, that the user replies with a voice "agree" or another statement indicating agreement; and the operation feedback made by the user to indicate that the location information of the terminal device is not agreed to be obtained is, for example, that the user replies with a voice "disagree" or another statement indicating disagreement.

In addition, if the sensing device is the terminal device, the terminal device may trigger the positioning notification, and obtain the feedback of the positioning notification. For a manner of triggering the positioning notification and a manner of obtaining the response message, refer to the foregoing example of triggering the feedback request for the positioning notification. Details are not described again. For example, the terminal device may trigger the positioning notification, obtain, via the operating system, the operation feedback of the user on the positioning notification, and further determine the feedback of the positioning notification based on the operation feedback. For example, the operation feedback may include: The user replies that the location information is agreed to be obtained, the user replies that the location information is not agreed to be obtained, or the user has no operation feedback. If the operation feedback is that the user replies that the location information is agreed to be obtained, the feedback of the positioning notification may indicate that the location information is agreed to be obtained. If the operation feedback is that the user replies that the location information is not agreed to be obtained, the feedback of the positioning notification may indicate that the location information is not agreed to be obtained.

In addition, based on the positioning permission (for example, the third subscription positioning information in the following) subscribed by the terminal device, if the operation feedback is that the user has no operation feedback, the sensing device may determine that the location information is agreed or not agreed, by the user, to be obtained. When the location information of the terminal device is not allowed to be obtained without agreement, for example, the third subscription positioning information indicates that the terminal device is not required to feed back agreement, or the third subscription positioning information further indicates that the location information of the terminal device is not allowed to be obtained when the user has no operation feedback, if the operation feedback is that the user has no operation feedback, the feedback of the positioning notification may indicate that the location information is not agreed to be obtained. Alternatively, it may be considered by default that the location information of the terminal device is not allowed to be obtained when the user has no operation feedback. In this case, the third subscription positioning information does not need to be referred to for decision of the sensing device. When the location information of the terminal device is allowed to be obtained without agreement, for example, the third subscription positioning information indicates that the terminal device is required to feed back agreement, or the third subscription positioning information further indicates that the location information of the terminal device is allowed to be obtained when the user has no operation feedback, if the operation feedback is that the user has no operation feedback, the feedback of the positioning notification may indicate that the location information is agreed to be obtained. That the location information of the terminal device is allowed or not allowed to be obtained without agreement may be determined based on the positioning permission subscribed by the terminal device. For details, refer to the following descriptions of the third subscription positioning information.

It may be understood that the response message (including the first response message or the second response message) of the positioning notification and the feedback of the positioning notification may alternatively be same information or messages. Alternatively, a field, in the response message of the positioning notification, that indicates that the location information is agreed to be obtained and a field, in the feedback of the positioning notification, that indicates that the location information is agreed to be obtained may be a same field or different fields. Alternatively, a field, in the response message of the positioning notification, that indicates that the location information is not agreed to be obtained and a field, in the feedback of the positioning notification, that indicates that the location information is not agreed to be obtained may be a same field or different fields.

In an example, the field, in the response message of the positioning notification, that indicates that the location information is agreed or not agreed to be obtained may include one bit. When a value of the bit is 0 (or 1), it indicates that the location information is not agreed to be obtained. When a value of the bit is 1 (or 0), it indicates that the location information is agreed to be obtained. In another example, the response message of the positioning notification may carry a status value of "true (true)" or "false (false)", where "true" indicates that the location information is agreed to be obtained, and "false" indicates that the location information is not agreed to be obtained.

In an example, when the sensing device is a sensing network element, a manner in which the sensing network element obtains the feedback of the positioning notification is, for example, the sensing network element sends the positioning notification to the terminal device via the AMF, that is, the AMF may serve as an intermediate network element. The terminal device triggers the feedback request for the positioning notification based on the positioning notification. The terminal device may determine the second response message based on the operation feedback of the user or based on no operation feedback of the user within a specific time period, and send the second response message of the positioning notification to the AMF. If the user replies that the location information is agreed to be obtained, the second response message may indicate that the user replies that the location information is agreed to be obtained. If the user replies that the location information is not agreed to be obtained, the second response message may indicate that the location information is not agreed, by the user, to be obtained. If the user has no operation feedback within a specific time period, the second response message may indicate that the user has no operation feedback. The AMF may send the first response message to the sensing network element based on the second response message or based on a case in which the second response message is not received within a specific time period. For the first response message and the second response message, refer to the descriptions in this application. Details are not described again.

Optionally, the sensing network element may obtain, in a sensing capability reporting process of the terminal device, an identifier of the AMF to which the terminal device belongs, for example, an AMF ID, to send the positioning notification to the terminal device based on the identifier of the AMF. In the sensing capability reporting process, the terminal device may report the sensing capability to the sensing network element via the AMF. The sensing capability may indicate that the terminal device supports or does not support sensing.

In addition, the response message of the positioning notification may be sent by the terminal device to the sensing network element via the AMF. In other words, the AMF may not process the second response message, that is, send the second response message to the sensing network element. In other words, the first response message may include the second response message.

### (2) Positioning permission subscribed by the terminal device

The positioning permission subscribed by the terminal device belongs to subscription information of the terminal device, and may be used to determine that the terminal device is allowed or not allowed to be positioned, or used to determine that the location information of the terminal device is allowed or not allowed to be obtained. The positioning permission subscribed by the terminal device may be a part of the subscription information of the terminal device stored in a core network. The subscription information of the terminal device may be stored in a data management function network element of the network. The data management function network element is, for example, a UDM, a UDR, or an NRF.

Optionally, the positioning permission subscribed by the terminal device may be a privacy configuration (privacy profile) of the terminal. The privacy configuration may reuse a privacy configuration of a positioning service (location service, LCS), or may be a privacy configuration specific to sensing.

In a possible embodiment, the positioning permission subscribed by the terminal device may include one or more of the following information:
(a) Information indicating that the location information of the terminal device is allowed or not allowed to be obtained, which may be referred to as first subscription positioning information for short below.

The first subscription positioning information may be used to determine that the location information of the terminal device is allowed or not allowed to be obtained in a sensing service or a sensing procedure. If the first subscription positioning information indicates that the location information is allowed to be obtained, the terminal device may serve as the transmitter of the sensing signal. In this application, the first subscription positioning information of the first terminal may indicate that the location information of the first terminal is allowed to be obtained in the sensing service or the sensing procedure.

(b) Information indicating whether the terminal device needs to be notified when the location information of the terminal device is obtained, which may be referred to as second subscription positioning information for short below.

If the second subscription positioning information indicates that the terminal device needs to be notified, the terminal device needs to be notified when the location information of the terminal device is obtained. For example, when the terminal device serves as the transmitter of the sensing signal, the terminal device needs to be notified that the terminal device is determined as the transmitter of the sensing signal, but the terminal device does not need to reply with a response message indicating agreement. For example, before determining the terminal device as the transmitter of the sensing signal, the sensing device does not need to send the positioning notification to the terminal device, and only needs to send a notification of the sensing role to the sensing device after determining that the terminal device serves as the transmitter of the sensing signal, to notify the terminal device that the terminal device serves as the transmitter of the sensing device.

If the second subscription positioning information indicates that the terminal device does not need to be notified, the terminal device does not need to be notified when the location information of the terminal device is obtained. For example, when the terminal device serves as the transmitter of the sensing signal, the terminal device does not need to be notified that the terminal device is determined as the transmitter of the sensing signal. For example, before determining the terminal device as the transmitter of the sensing signal, the sensing device does not need to send the positioning notification to the terminal device, and after determining that the terminal device serves as the transmitter of the sensing signal, the sensing device does not need to send the notification of the sensing role to the sensing device.

(c) Information indicating whether the terminal device is required to feed back agreement when the location information of the terminal device is obtained, which may be referred to as third subscription positioning information for short below.

If the third subscription positioning information indicates that the terminal device is required to feed back agreement, agreement of the terminal device is required when the location information of the terminal device is obtained. Therefore, if the third subscription positioning information indicates that the terminal device is required to feed back agreement, before determining the terminal device as the transmitter of the sensing signal, the sensing network element may send the positioning notification to the terminal device, to request to determine that the location information of the terminal device is allowed or not allowed to be obtained. The sensing network element may receive the response message from the terminal device, where the response message may indicate that the location information is agreed, by the terminal device, to be obtained. When the sensing network element receives the response message that is from the terminal device and that indicates that the location information is not agreed to be obtained, the terminal device is not allowed to be determined as the transmitter of the sensing signal.

In addition, if the third subscription positioning information indicates that the terminal device is not required to feed back agreement, agreement of the terminal device is not required when the location information of the terminal device is obtained. Therefore, before the terminal device is determined as the transmitter of the sensing signal, the positioning notification does not need to be sent to the terminal device, and the terminal device is not required to reply with a response message to indicate that the location information of the terminal device is agreed to be obtained. Alternatively, the sensing network element may send the positioning notification to the terminal device, but does not need to wait for or receive a response message replied by the terminal device.

Optionally, the third subscription positioning information may further indicate that the location information of the terminal device is allowed or not allowed to be obtained when the user has no operation feedback and/or the terminal device does not reply to the positioning notification (or the feedback request for the positioning notification). For example, the third subscription positioning information may indicate that the location information of the terminal device is not allowed to be obtained when the sensing network element does not receive the response message that is from the terminal device and that indicates that the location information is agreed to be obtained. In this case, when the user has no operation feedback and/or does not receive the response message that is from the terminal device and that indicates that the location information is agreed to be obtained, the terminal device is not allowed to be determined as the transmitter of the sensing signal. When the sensing network element sends the positioning notification to the terminal device via the intermediate network element, the intermediate network element may determine, based on a case in which the response message of the terminal device is not obtained, to send a response message or a feedback message to the sensing network element, where the response message or the feedback message indicates that the terminal device does not reply to the positioning notification.

### (d) Location information

The location information may indicate a location or an area to which the positioning permission subscribed by the terminal is applicable. A same terminal may subscribe to different positioning permission in different locations or areas. Specifically, when the terminal device is in different locations or areas, at least one of the first subscription positioning information, the second subscription positioning information, or the third subscription positioning information in the positioning permission subscribed by the terminal device may be different. For example, first subscription information of the terminal device in an area A indicates that the location information of the terminal device is allowed to be obtained, and first subscription information of the terminal device in an area B indicates that the location information of the terminal device is not allowed to be obtained.

Correspondingly, if the positioning permission subscribed by the first terminal includes the location information, in S102, the sensing device may determine, based on the location information and the location information of the first terminal, that the location information is allowed or not allowed to be obtained when the first terminal is at the location. For example, if the first terminal is located in the area A, and the first subscription information corresponding to the area A indicates that the location information of the terminal device is allowed to be obtained, the first terminal may serve as the transmitter of the sensing signal of the first sensing service.

### (e) Time information

The location information may indicate time or a time range to which the positioning permission subscribed by the terminal is applicable. A same terminal may subscribe to different positioning permission in different time or time ranges. Specifically, when the terminal device is in different time or different time ranges, at least one of the first subscription positioning information, the second subscription positioning information, or the third subscription positioning information in the positioning permission subscribed by the terminal device may be different. For example, first subscription information of the terminal device at time A indicates that the location information of the terminal device is allowed to be obtained, and first subscription information of the terminal device at time B indicates that the location information of the terminal device is not allowed to be obtained.

Correspondingly, if the positioning permission subscribed by the first terminal includes the time information, in S102, the sensing device may determine, based on the time information and time information of the sensing request, that the location information is allowed or not allowed to be obtained when the first terminal is at the location. The time information of the sensing request may indicate one or more of sending time of the sensing request, time information (time or a time range) indicated in the sensing request, or sending time of the sensing signal. For example, the positioning permission subscribed by the first terminal includes the time information, time corresponding to the time information of the sensing request is included in a time range indicated by the time information included in the positioning permission subscribed by the first terminal, and first subscription information corresponding to the time information indicates that the location information of the terminal device is allowed to be obtained. In this case, the first terminal may serve as the transmitter of the sensing signal of the first sensing service.

Table B shows an example of the positioning permission subscribed by the terminal device.

**Table B**

| Example | Subscribed positioning permission | Location information (optional) | Time information (optional) |
|---|---|---|---|
| 1 | (a) The location information of the terminal device is not allowed to be obtained | Not applicable (not applicable, N/A) | N/A |
| 2 | | Location 1 | Time period A |
| 3 | (a) The location information of the terminal device is allowed to be obtained | N/A | N/A |
| 4 | | Location 2 | Time period B |
| 5 | (a) The location information of the terminal device is allowed to be obtained; and | N/A | N/A |
| 6 | | Location 3 | Time period C |
| | (b) the terminal device needs to be notified | | |
| 7 | (a) The location information of the terminal device is allowed to be obtained; and | N/A | N/A |
| 8 | | Location 4 | Time period D |
| | (c) agreement of the terminal device is required, and the location information can still be obtained even if the terminal device has no feedback | | |
| 9 | (a) The location information of the terminal | N/A | N/A |
| 10 | device is allowed to be obtained; | Location 5 | Time period E |
| | (b) the terminal device needs to be notified; and | | |
| | (c) agreement of the terminal device is required, and the location information is restricted from being obtained when the terminal device has no feedback | | |

In a possible embodiment, the sensing device, for example, the sensing network element, may obtain, from the data management function network element, the positioning permission subscribed by the terminal device. For example, the sensing network element may send an identifier of the terminal device to the data management function network element. In response to the identifier of the terminal device, the data management function network element queries the positioning permission subscribed by the terminal device, and sends the positioning permission subscribed by the terminal device to the sensing network element. In this application, the identifier of the terminal device is, for example, a subscription permanent identifier (subscription permanent identifier, SUPI) of the terminal device.

The sensing network element may send identifiers of a plurality of terminal devices to the data management function network element, for example, send a list including the identifiers of the plurality of terminals. The plurality of terminals may be candidate terminals of the transmitter of the sensing signal of the first sensing service, and the plurality of terminals may include the first terminal. Optionally, the data management function network element may feed back, to the sensing network element through one message or one piece of signaling, positioning permission separately subscribed by the plurality of terminals, to reduce signaling overheads. In this case, the data management function network element may determine, based on a sequence of the identifiers of the plurality of terminal devices from the sensing network element, a sequence of the fed back positioning permission separately subscribed by the plurality of terminals, or may send, to the sensing network element, the identifier of each of the plurality of terminal devices and the subscribed positioning permission in a form of a correspondence.

In another possible embodiment, the positioning permission subscribed by the terminal device may alternatively be stored or configured in the sensing network element. For example, after the terminal device subscribes to the positioning permission, the UDM provides the positioning permission subscribed by the terminal device to the SF, and the SF may locally store the positioning permission subscribed by the terminal device. In this case, after the SF receives the sensing request, the SF may locally obtain the positioning permission subscribed by the terminal device.

(3) The indication information is indication information indicating that the location information of the terminal device is allowed or not allowed to be obtained.

The indication information may be determined based on the feedback of the positioning notification of the terminal device and/or the subscribed positioning permission, for example, is an identifier or field indicating that the location information of the terminal device is allowed or not allowed to be obtained.

For the feedback of the positioning notification of the terminal device and a manner of obtaining the feedback, and the positioning permission subscribed by the terminal device and a manner of obtaining the positioning permission, refer to the descriptions in this application. Details are not described again.

In an example, if both the feedback of the positioning notification of the terminal device and the positioning permission subscribed by the terminal device indicate or determine that the location information of the terminal device is allowed to be obtained, that is, the terminal device is allowed to be positioned, the indication information may indicate that the location information of the terminal device is allowed to be obtained. In addition, if one or more of the feedback of the positioning notification of the terminal device and the positioning permission subscribed by the terminal device indicate or determine that the location information of the terminal device is not allowed to be obtained, the indication information may indicate that the location information of the terminal device is not allowed to be obtained.

In addition, if the feedback of the positioning notification indicates that the user has no operation feedback or the terminal device does not reply to the positioning notification, the sensing device may determine the indication information based on the positioning permission subscribed by the terminal device, that is, determine, based on the positioning permission subscribed by the terminal device, that the location information of the terminal device is allowed or not allowed to be obtained.

In this application, the sensing device may determine the indication information based on the feedback of the positioning notification of the terminal device and/or the subscribed positioning permission before or after receiving the sensing request. In other words, a sequence between time at which the sensing device receives the sensing request and time at which the indication information is determined based on the feedback of the positioning notification of the terminal device and/or the subscribed positioning permission is not limited in this application.

The sensing device may determine the indication information based on the feedback of the positioning notification of the terminal device and/or the subscribed positioning permission before receiving the sensing request in S101. Therefore, after receiving the sensing request in S101, the sensing device may determine, based on the indication information, that the location information of the terminal device is allowed or not allowed to be obtained. For example, the sensing device may trigger determining of the indication information based on a registration request of the terminal device, and store the indication information in the sensing device, for example, store a correspondence between the identifier of the terminal device and the indication information. For another example, the sensing device may trigger determining of the indication information based on the obtained sensing capability of the terminal device, and store the indication information in the sensing device, for example, store a correspondence between the identifier of the terminal device and the indication information. Therefore, the sensing device may store the indication information, without storing the complete feedback of the positioning notification of the terminal device and/or the subscribed positioning permission, thereby saving storage space and supporting more efficient determining of the positioning permission.

Optionally, the sensing network element may still store the indication information after the terminal is deregistered (de-registration) from the network, to avoid repeatedly triggering determining of the indication information when the terminal is registered again or when the sensing network element obtains the sensing capability of the terminal again, thereby saving processing resources of the sensing network element. In this case, the sensing network element may determine, when the terminal is registered or when the sensing capability of the terminal is obtained, whether the indication information of the terminal device is locally stored or not, and trigger determining of the indication information when the indication information of the terminal device is not locally stored.

In a possible implementation, when storing the indication information of the terminal device, the sensing network element may store a correspondence between an identifier of an AMF to which the terminal device belongs and the indication information. For example, the sensing network element stores a correspondence between the identifier (for example, an SUPI) of the terminal device, the AMF ID, and the indication information, so that when the positioning notification needs to be sent to the terminal device, the AMF to which the terminal device belongs is queried based on the AMF ID. The AMF to which the terminal belongs may be specifically an AMF that serves the terminal device, for example, referred to as a serving AMF (serving AMF). The sensing network element may obtain the AMF ID in a process in which the terminal device reports the sensing capability. Alternatively, the sensing network element may obtain the identifier of the AMF to which the terminal device belongs from the data management function network element. For example, the data management function network element may query, based on the identifier of the terminal device provided by the sensing network element, the AMF to which the terminal device belongs, and provide the AMF ID for the sensing network element. Correspondingly, the sensing network element may obtain the AMF ID to which the terminal device belongs from the data management function network element. The data management function network element may query, based on the identifier of the terminal device, the positioning permission subscribed by the terminal device and the AMF ID, and provide the positioning permission subscribed by the terminal device and the AMF ID to the sensing network element through a same message.

Optionally, if the plurality of terminal devices belong to a same AMF, the sensing network element may send the positioning notification to the AMF through a same message, and identifiers of the plurality of terminal devices may be carried, to reduce signaling overheads. The AMF may send the positioning notification to the plurality of terminal devices based on the sensing notification and the identifiers of the plurality of terminal devices, and receive the response message sent by the terminal devices.

For example, the sensing device is the sensing network element. After receiving the registration request from the terminal device or receiving the sensing capability of the terminal device, the sensing network element may obtain the feedback of the positioning notification of the terminal device and/or the positioning permission subscribed by the terminal device, and determine the indication information based on the feedback of the positioning notification of the terminal device and/or the positioning permission subscribed by the terminal device. After receiving the sensing request, the sensing network element may determine, based on the indication information, whether the terminal device can serve as the transmitter of the sensing signal.

Before S102, the sensing device may obtain the sensing role indication of the terminal device.

If the sensing device is the sensing network element, the sensing device may obtain the sensing role indication from the terminal device. For example, the terminal device may report the sensing role indication to the network through the registration request or a sensing capability reporting related message. Alternatively, the sensing network element may request, based on the sensing request in S101, the terminal device to report the sensing role indication, and the terminal device may provide the sensing role indication based on the request of the sensing network element. In addition, if the sensing device is the terminal device, the terminal device may determine the sensing role indication based on a feedback of the user on a sensing role request of the terminal device. Optionally, the sensing role indication may be determined based on sensing capability information.

In this application, the terminal device may determine the sensing role indication based on the feedback of the user on the sensing role request of the terminal device. The sensing role request may be used to request the user to reply that the terminal device is agreed or not agreed to serve as the transmitter of the sensing signal. The first terminal is used as an example. If the operation feedback of the user of the first terminal indicates that the first terminal is agreed to serve as the transmitter of the sensing signal, the sensing role indication may indicate that the first terminal is allowed to serve as the transmitter of the sensing signal. If the operation feedback of the user indicates that the first terminal is not agreed to serve as the transmitter of the sensing signal, or the user does not reply that the first terminal is agreed to serve as the transmitter of the sensing signal within the second time period, the sensing role indication may indicate that the first terminal is allowed to serve as the transmitter of the sensing signal. In this application, the first time period may be the same as or different from the second time period. This is not specifically limited.

For example, the terminal device may trigger or display (for example, display or play through a voice) the sensing role request to the user via the operating system. The sensing role request may be used to request the user to reply that the terminal device is agreed or not agreed to serve as the transmitter of the sensing signal. After the sensing role request is triggered, the terminal device may further detect the operation feedback of the user, and determine, based on the operation feedback, that the terminal device is agreed or not agreed, by the user, to serve as the transmitter of the sensing signal. For a manner in which the terminal device displays the sensing role indication to the user and a manner in which the user performs an operation feedback, refer to the implementation in which the terminal device triggers the positioning notification. Details are not described again.

Optionally, the sensing capability information of the terminal device may include a sensing signal sending capability and/or a sensing signal receiving capability. The sensing signal sending capability may include a capability related to sending of the sensing signal, and the sensing signal receiving capability may include a capability related to receiving and/or measuring of the sensing signal.

The terminal device may determine, based on the sensing capability information, whether the terminal device supports serving as the transmitter of the sensing signal, and determine, based on whether the terminal device supports serving as the transmitter of the sensing signal, one or more of the sensing signal sending capability and the sensing signal receiving capability. For example, the sensing capability information may include capability information indicating whether the terminal device supports serving as the transmitter of the sensing signal. Alternatively, whether the terminal device supports serving as the transmitter of the sensing signal may be determined based on whether the sensing capability information of the terminal device includes the sensing signal sending capability. For example, when the sensing capability information of the terminal device includes the sensing signal sending capability information, the terminal device supports serving as the transmitter of the sensing signal.

If the sensing role of the terminal device indicates that the terminal device is not agreed to serve as the transmitter of the sensing signal, the capability information reported by the terminal device to the sensing network element may include only the sensing signal receiving capability. If the sensing role of the terminal device indicates that the terminal device is agreed to serve as the transmitter of the sensing signal, the capability information reported by the terminal device to the sensing network element may include the sensing signal sending capability and the sensing signal receiving capability. In this case, the capability information reported by the terminal device to the sensing network element may be understood as the sensing role indication of the terminal device. In other words, the sensing network element may determine, based on the capability information reported by the terminal device to the sensing network element, that the terminal supports or does not support serving as the transmitter of the sensing signal.

In addition, if the sensing capability of the terminal device does not distinguish between the sensing signal sending capability and the sensing signal receiving capability, and the sensing role of the terminal device indicates that the terminal device is not allowed to serve as the transmitter of the sensing signal, the terminal device may report the sensing capability and the sensing role indication, to indicate that the terminal device supports but is not allowed to serve as the transmitter of the sensing signal. In other words, in this case, the sensing role indication may indicate that the terminal device serves as only the transmitter of the sensing signal, and/or indicate that the terminal device does not serve as the transmitter of the sensing signal. If the sensing role of the terminal device indicates that the terminal device is allowed to serve as the transmitter of the sensing signal, the terminal device may report the sensing capability. In this case, the network may consider by default that the terminal device supports and is allowed to serve as the transmitter of the sensing signal.

In a possible embodiment, the sensing device may determine, based on the sensing capability information of the terminal device, whether the terminal device supports serving as the transmitter of the sensing signal, that is, determine whether the terminal device has a capability of serving as the transmitter of the sensing signal. In a process of determining that the first terminal serves as the transmitter of the sensing signal of the first sensing service, the sensing device may determine that the first terminal supports serving as the transmitter of the sensing signal. For example, that the terminal device (for example, including the first terminal) supports serving as the transmitter of the sensing signal may be used by the sensing device as a condition for triggering execution of the method shown in this application, or as a condition for triggering obtaining of the positioning permission subscribed by the terminal device, or as a condition for triggering obtaining of the feedback of the positioning notification in this application. That is, when learning that the terminal device supports serving as the transmitter of the sensing signal, the sensing device may perform the method shown in this application, to check whether the terminal device is allowed to serve as the transmitter of the sensing signal.

In an embodiment, the terminal device may trigger sending of the sensing role request based on the sensing request. For example, when the terminal device determines, based on the sensing request, that the terminal device serves as the transmitter of the sensing signal, the terminal device may send the sensing role request. In another embodiment, the terminal device may trigger sending of the sensing request according to a specific configuration rule. For example, the terminal device may trigger the sensing role request based on a specific period and/or when a specific condition is met. In an example, a condition for triggering the sensing role request by the terminal device is, for example, that the terminal device is to send a registration request (for example, a registration request for initial registration).

In various embodiments of this application, the sensing device may obtain one or more of the foregoing positioning permission, and/or obtain the sensing role indication of the terminal device, and implement proper determining of the transmitter based on the positioning permission and/or the sensing role indication.

In a possible embodiment, the sensing device may obtain positioning permission and/or sensing role indications subscribed by a plurality of terminal devices (for example, referred to as second terminals), and determine, based on the positioning permission and/or the sensing role indications subscribed by the terminal devices, one or more terminal devices that are allowed to serve as the transmitter of the sensing signal, for example, determine a list of terminal devices that are allowed to serve as the transmitter of the sensing signal, and determine the first terminal from the one or more terminal devices that are allowed to serve as the transmitter of the sensing signal. The positioning permission of the first terminal is used to determine or indicate that the location information of the first terminal is allowed to be obtained, and/or the sensing role indication of the first terminal indicates that the first terminal is allowed to serve as the transmitter of the sensing signal.

If the positioning permission subscribed by the terminal device includes the location information and/or the time information, when it is determined that the terminal device is allowed or not allowed to serve as the transmitter of the sensing signal, the location of the terminal device and/or the time information of the sensing request may be considered. For details, refer to the descriptions in this application.

Identifiers of the plurality of terminal devices may be included in the sensing request. Alternatively, the plurality of terminal devices may be terminal devices that are determined based on the sensing request and that can serve as sensing nodes or the transmitter of the sensing signal of the first sensing service. For example, the plurality of terminal devices include a candidate terminal of the transmitter of the sensing signal of the first sensing service.

In another possible embodiment, the sensing device may select one terminal device from a list of a plurality of terminal devices, and obtain positioning permission subscribed by the terminal device and/or a sensing role indication. When it is determined, based on the positioning permission subscribed by the terminal device, that location information of the terminal device is allowed to be obtained, and/or it is determined, based on the sensing role indication, that the terminal device is allowed to serve as a transmitter of a sensing signal, the sensing device selects the terminal device as the transmitter of the sensing signal. When it is determined that the location information of the terminal device is allowed to be obtained or the terminal device is not allowed to serve as the transmitter of the sensing signal, another terminal device is selected. The foregoing operations are repeated until the transmitter of the sensing signal is selected.

If the positioning permission subscribed by the terminal device includes the location information and/or the time information, when it is determined that the terminal device is allowed or not allowed to serve as the transmitter of the sensing signal, the location of the terminal device and/or the time information of the sensing request may be considered. For details, refer to the descriptions in this application.

The following describes the method provided in embodiments of this application with reference to a flowchart. It may be understood that the following procedure may be implemented in combination with the descriptions of the possible implementations or embodiments of the methods in this application. The following procedure may be used as an example of an implementation of this application, but is not intended to limit an implementation procedure of this application.

FIG. 6 shows an example of a procedure when the method in FIG. 5 is implemented by a sensing network element. In FIG. 6, an example in which the sensing network element is an SF is used. Based on a requirement of an implementation scenario, the SF may alternatively be replaced with another network element or device, for example, a sensing server. This is not specifically limited.

As shown in FIG. 6, the procedure may include the following steps:
S201: An SF receives a sensing request, where the sensing request may be from an initiator of a sensing service.

The sensing request is used to request a first sensing service.

The SF may determine, based on the sensing request, that a mode of the first sensing service is that the terminal device serves as a transmitter of a sensing signal. Alternatively, the SF may determine the transmitter of the sensing signal based on the sensing request, where the transmitter of the sensing signal is the terminal device. In this case, the SF may not determine the transmitter of the sensing signal after determining the mode of the first sensing service, but directly select a specific node from nodes that are allowed to serve as the transmitter of the sensing signal to send the sensing signal of the first sensing service. The nodes that are allowed to serve as the transmitter of the sensing signal include an access network device and/or the terminal device, and the specific node is the terminal device. For example, the sensing request may include mode information of a sensing service requirement, or the sensing service requirement in the sensing request may be used to determine a sensing mode.

The SF may determine, based on the sensing request, one or more candidate terminal devices for sending the sensing signal, that is, obtain the one or more terminal devices or obtain identifiers of the one or more terminal devices. For example, the sensing request includes a service requirement, for example, a sensing range, and the service requirement may be used to determine the one or more candidate terminal devices.

It may be understood that S201 may be used as an example implementation of step S101 in the procedure in FIG. 5.

The SF may be triggered, based on the sensing request, to perform S202 and/or S203. For example, if the SF determines, based on the sensing request, that the sensing mode is that the terminal device serves as the transmitter of the sensing signal, the SF triggers performing of S202 and/or S203. For another example, the SF may determine the transmitter of the sensing signal based on the sensing request, and when the transmitter of the sensing signal is the terminal device, the SF triggers performing of S202 and/or S203. In addition, the SF may alternatively query, based on local storage, positioning permission subscribed by the terminal device and/or a feedback of a positioning notification.

S202: The SF obtains, from a UDM, the positioning permission subscribed by the terminal device.

The UDM may be used as an example of a data management function network element shown in this application.

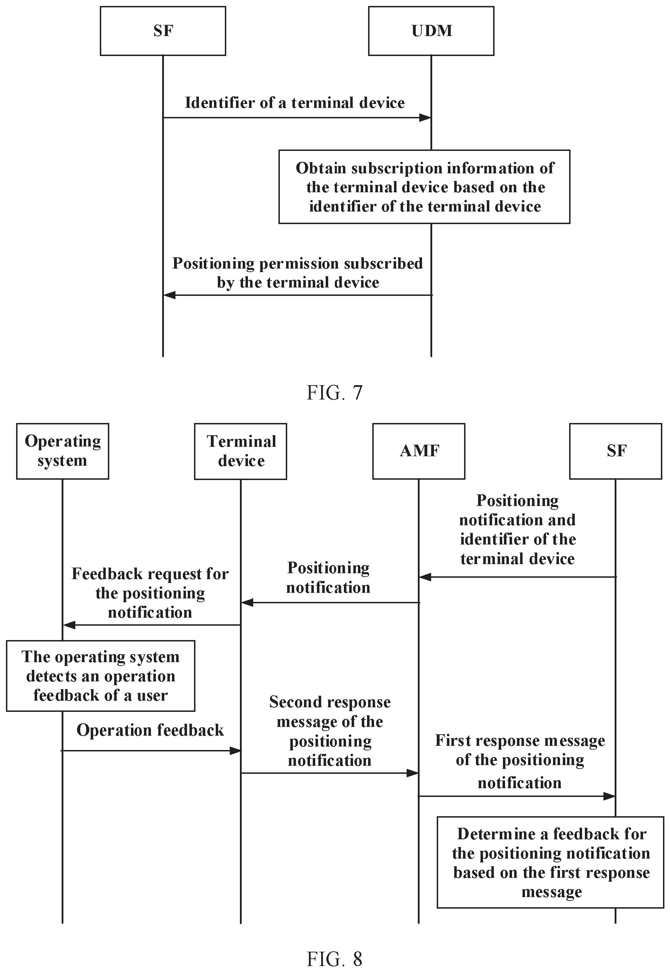

With reference to the descriptions of a manner in which the sensing device obtains the positioning permission subscribed by the terminal device from the data management function network element in this application, in S202, the SF may send an identifier of the terminal device to the UDM, and receive the positioning permission subscribed by the terminal device from the UDM. The identifier of the terminal device may be carried in a request for obtaining the positioning permission subscribed by the terminal device. For example, as shown in FIG. 7, the SF may send a terminal identifier list to the UDM, where the terminal identifier list includes identifiers of one or more terminal devices, for example, includes SUPIs of the one or more terminal devices. After receiving the terminal identifier list, the UDM obtains subscription information of the terminal device based on the identifier of the terminal device, where the subscription information includes the positioning permission subscribed by the terminal device. The UDM may further send the positioning permission subscribed by the terminal device to the SF. The positioning permission subscribed by the terminal device may be carried in a reply for obtaining the positioning permission subscribed by the terminal device.

If there are a plurality of terminal devices, the UDM may send, to the SF through a same list or message, positioning permission subscribed by the plurality of terminal devices.

Optionally, the positioning permission subscribed by the one or more terminal devices may alternatively be stored or configured in the SF. In this case, the SF may locally obtain the positioning permission of the one or more terminals.

S203: The SF obtains the feedback of the positioning notification. The positioning notification is used to request a user of the terminal device to reply that location information is agreed or not agreed to be obtained. The feedback of the positioning notification may be used to describe a feedback result of the terminal device for the positioning notification, and specifically includes that the location information is agreed to be obtained, that the location information is not agreed to be obtained, or that the terminal device does not reply.

The terminal device may be one or more candidate terminal devices determined by the SF based on the sensing request.

With reference to the descriptions of a manner in which the sensing device obtains the feedback of the positioning notification in this application, in S203, the SF may send the positioning notification to the terminal device, and obtain the feedback of the positioning notification.

As shown in FIG. 8, the SF may send, to an AMF, a message carrying the positioning notification of the terminal device. Optionally, the message may further carry the identifier of the terminal device. The AMF may send the positioning notification to the terminal device based on the identifier of the terminal device. The terminal device may trigger, based on the positioning notification, a feedback request for the positioning notification, to request the user to reply that the location information is agreed or not agreed to be obtained. An operating system may detect an operation feedback of the user, and provide the operation feedback of the user for the terminal device. The terminal device may determine a second response message of the positioning notification based on the operation feedback of the user, and send the second response message to the AMF. The second response message may indicate that the location information is agreed or not agreed, by the terminal device, to be obtained. The AMF may receive the second response message of the positioning notification sent by the terminal device, and send, based on the second response message, a first response message of the positioning notification to the SF. The SF may determine the feedback of the positioning notification based on the first response message. As described in this application, the first response message may indicate that a first terminal or a user of the first terminal replies that the location information is agreed to be obtained, the first terminal or the user of the first terminal replies that the location information is not agreed to be obtained, the user has no operation feedback, or the first terminal does not reply to the positioning notification. The second response message may indicate that the user replies that the location information is agreed to be obtained, the location information is not agreed to be obtained, or the user has no operation feedback.

It may be understood that, for a manner of determining the operation feedback, the second response message, the first response message, and the feedback of the positioning notification in FIG. 8, refer to corresponding descriptions in embodiments of this application. Details are not described herein again.

It may be understood that, if a plurality of terminal devices belong to a same AMF, the SF may send the positioning notification and identifiers of the plurality of terminal devices to the AMF through one piece of signaling or message, and the AMF may send the positioning notification to the plurality of terminal devices based on the identifiers of the plurality of terminal devices. Correspondingly, the AMF may also send feedbacks of positioning notifications of the plurality of terminal devices to the SF through a same piece of signaling or a same message. In this case, the AMF may send a correspondence between the feedbacks of the positioning notifications of the plurality of terminal devices and SUPIs of the plurality of devices to the SF.

In a possible implementation, S203 may be performed based on S202. For example, the SF obtains, based on S202, the positioning permission subscribed by the terminal device. When the positioning permission subscribed by the terminal device includes information indicating that the terminal device is required to feed back agreement when the location information of the terminal device is obtained and information indicating that the feedback of the positioning notification needs to be obtained when the location information of the terminal device is obtained, the SF triggers S203, to obtain the feedback of the positioning notification of the terminal device.

S204: The SF determines the transmitter of the sensing signal of the first sensing service based on the positioning permission subscribed by the terminal device and/or the feedback of the positioning notification.

S204 may be used as an example of S102. For example, in S204, the transmitter of the sensing signal of the first sensing service determined by the SF is the first terminal in S102.

The SF may determine, from the plurality of terminal devices based on the positioning permission subscribed by the plurality of terminal devices and/or the feedbacks of the positioning notifications, a terminal device (one or more terminal devices whose location information is allowed to be obtained) that is allowed to serve as the transmitter of the sensing signal. Further, the SF may determine, from the one or more terminal devices that are allowed to serve as the transmitter of the sensing signal, one or more terminal devices (namely, the first terminal) that serve as the transmitter of the sensing signal of the first sensing service.

It may be understood that, if the SF determines, based on the positioning permission subscribed by the terminal device and/or the feedback of the positioning notification, that no terminal device is allowed to serve as the transmitter of the sensing signal, the first sensing service may be ended, for example, a service failure message is sent. Alternatively, the SF may change the sensing mode, for example, use a sensing mode in which a network device serves as the transmitter of the sensing signal.

In FIG. 6, the sensing network element may trigger, based on the sensing request, obtaining of the positioning permission subscribed by the terminal device and/or the feedback of the positioning notification, and determine, based on the positioning permission subscribed by the terminal device and/or the feedback of the positioning notification, the transmitter of the sensing signal, to properly determine the transmitter of the sensing signal.

In an optional implementation, before S204, the SF may further obtain a sensing role indication of the terminal device from the terminal device. Therefore, S204 may be replaced with the following step: The SF may determine the transmitter of the sensing signal of the first sensing service based on the sensing role indication of the terminal device. For example, the sensing role indication of the transmitter of the sensing signal of the first sensing service that is determined by the SF in S204 may indicate that the terminal device is allowed to serve as the transmitter of the sensing signal.

For example, the sensing role indication of the terminal device may indicate whether the terminal device can serve as the transmitter of the sensing signal.

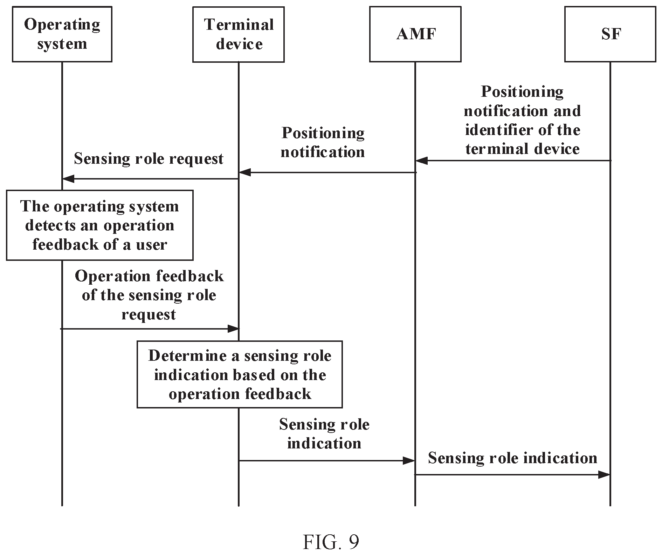

As shown in FIG. 9, in an example in which the SF obtains the sensing role indication from the terminal device, when determining that a sensing capability needs to be reported, the terminal device may trigger a sensing role request via the operating system of the terminal device. The operating system of the terminal device may detect the operation feedback of the user, and determine a response message of the sensing role request based on the operation feedback. The operating system of the terminal device may further indicate the operation feedback (or the response message) of the user to the terminal device, to indicate the user to reply that the terminal device is agreed or not agreed to serve as the transmitter of the sensing signal. The terminal device may determine the sensing role indication based on the operation feedback of the sensing role request. The terminal device may send the sensing role indication to the AMF. For example, the terminal device may include the sensing role request indication in the sensing capability and report the sensing capability to the AMF through a registration request. The AMF may send the sensing role indication to the SF. For example, the AMF may include the sensing capability or the sensing role indication in the sensing registration request and send the sensing registration request to the SMF. Optionally, the terminal device may alternatively trigger the sensing role request at any other moment rather than only when it is determined that sensing capability needs to be reported, and further determine the sensing role indication based on the operation feedback of the sensing role request.

In addition, this application does not exclude a case in which the SF sends, to the terminal device after determining, based on the sensing request, one or more terminal devices that may serve as the transmitter of the sensing signal, a request for the sensing role indication, so that the terminal device provides the sensing role indication to the SF based on the request. For a manner in which the terminal device obtains the sensing role indication, refer to the manner in which the terminal device obtains the sensing role indication in FIG. 9. Details are not described again.

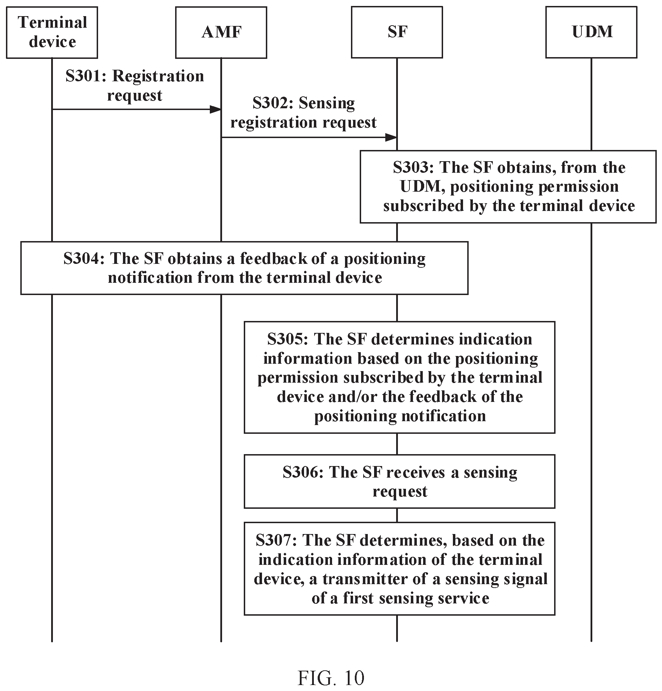

FIG. 10 shows another example of a procedure when the method in FIG. 5 is implemented by a sensing network element. In FIG. 10, an example in which the sensing network element is an SF is used. Based on a requirement of an implementation scenario, the SF may alternatively be replaced with another network element or device, for example, a sensing server. This is not specifically limited.

A difference from the procedure shown in FIG. 9 is that in FIG. 9, the SF triggers, based on the sensing request, determining of the positioning permission subscribed by the terminal device and/or the feedback of the positioning notification. However, in FIG. 10, the SF may trigger, based on the sensing registration request of the terminal device or any information carrying the sensing capability of the terminal device, determining of the positioning permission subscribed by the terminal device and/or the feedback of the positioning notification, and determine, based on the positioning permission subscribed by the terminal device and/or the positioning notification, indication information indicating that the location information of the terminal device is allowed or not allowed to be obtained. It may also be understood that the SF may store the indication information of the terminal device. Therefore, after receiving the sensing request, the SF does not need to determine the indication information based on the positioning permission subscribed by the terminal device and/or the positioning notification, and only needs to read or obtain the indication information. In addition, in the procedure in FIG. 10, the SF may obtain the indication information based on the sensing request, and determine, based on the indication information of the terminal device, the terminal device that serves as the transmitter of the sensing signal.

As shown in FIG. 10, the procedure may include the following steps:
S301: A terminal device sends a registration request to an AMF.

The registration request may include a sensing capability of the terminal device. The sensing capability of the terminal device may be used to determine that the terminal device may serve as a sensing signal sending node and/or a sensing signal receiving node in a sensing procedure.

It should be noted that, in this example, that the terminal device sends the registration request to the AMF is used as an example for description. The registration request may alternatively be any information that is sent by the terminal device to a network side and that carries the sensing capability of the terminal device. Details are not described subsequently.

S302: The AMF sends a sensing registration request of the terminal device to an SF based on the registration request of the terminal device, to register the sensing capability of the terminal device, or send the sensing capability of the terminal device to the SF.

The sensing registration request may include the sensing capability of the terminal device and an identifier of the terminal device.

Correspondingly, the SF receives the sensing registration request of the terminal device.

The SF may perform S303 and/or S304 based on the sensing registration request of the terminal device.

Optionally, before S303 and/or S304 are/is performed, the SF may search for whether positioning permission subscribed by the terminal device and/or a feedback of a positioning notification are/is stored locally. If the positioning permission subscribed by the terminal device is stored, S303 may be ignored. If the feedback of the positioning notification is stored, S304 may be ignored.

S303: The SF obtains, from a UDM, the positioning permission subscribed by the terminal device.

The SF may obtain the positioning permission subscribed by the terminal device with reference to the procedure shown in FIG. 7.

S304: The SF obtains the feedback of the positioning notification from the terminal device.

The SF may obtain the feedback of the positioning notification with reference to the procedure shown in FIG. 8.

It may be understood that, for S303 and S304, respectively refer to the descriptions of S202 and S203. Details are not described again.

S305: The SF determines, based on the positioning permission subscribed by the terminal device and/or the feedback of the positioning notification, indication information indicating that location information of the terminal device is allowed or not allowed to be obtained.

The SF may store a correspondence between the identifier of the terminal device and the indication information, to search for the indication information based on the identifier of the terminal device.

S306: The SF receives a sensing request, where the sensing request may be from an initiator of a sensing service.

S306 may be used as an example of S101.

For S306, refer to the descriptions of S201.

S307: The SF determines a transmitter of a sensing signal of a first sensing service based on the indication information that is of the terminal device and that indicates that the location information of the terminal device is allowed or not allowed to be obtained.

S307 may be used as an example of S102. For example, in S307, the transmitter of the sensing signal of the first sensing service determined by the SF is the first terminal in S102.

In S307, the SF may determine one or more terminal devices based on the sensing request, and determine, based on identifiers of the one or more terminal devices, the indication information indicating that the location information of the terminal device is allowed or not allowed to be obtained.

The SF may determine, based on the sensing request, one or more candidate terminal devices for sending the sensing signal, that is, obtain the one or more terminal devices or obtain identifiers of the one or more terminal devices. For example, the sensing request includes a service requirement, for example, a sensing range, and the service requirement may be used to determine the one or more candidate terminal devices.

The SF may determine, from the plurality of terminal devices based on indication information that is of the plurality of terminal devices and that indicates that the location information of the terminal device is allowed or not allowed to be obtained, one or more terminal devices whose location information is allowed to be obtained, as the terminal devices that are allowed to serve as the transmitter of the sensing signal. Further, the SF may determine, from the one or more terminal devices that are allowed to serve as the transmitter of the sensing signal, one or more terminal devices that serve as the transmitter of the sensing signal of the first sensing service.

It may be understood that, if the SF determines, based on the indication information that is of the terminal device and that indicates that the location information of the terminal device is allowed or not allowed to be obtained, that no terminal device supports or allows to serve as the transmitter of the sensing signal, the first sensing service may be ended, for example, a service failure message is sent. Alternatively, the SF may change a sensing mode, for example, use a sensing mode in which a network device serves as the transmitter of the sensing signal.

In FIG. 10, the sensing network element may trigger, based on the sensing registration request of the terminal device, obtaining of the positioning permission subscribed by the terminal device and/or the feedback of the positioning notification, and determine the indication information of the terminal device, where the indication information may indicate that the location information of the terminal device is allowed or not allowed to be obtained. In addition, the sensing network element may obtain the indication information of the terminal device based on the sensing request of the first sensing service, and determine, based on the indication information of the terminal device, the terminal device that serves as the transmitter of the sensing signal of the first sensing service. The indication information of the terminal device that serves as the transmitter of the sensing signal of the first sensing service indicates that the location information of the terminal device is allowed to be obtained. Therefore, the transmitter of the sensing signal can be properly determined. It may be understood that, after determining the indication information based on the positioning permission subscribed by the terminal device and/or the feedback of the positioning notification, the SF may store the indication information of the terminal device. Therefore, after receiving the sensing request, the SF does not need to determine the indication information based on the positioning permission subscribed by the terminal device and/or the positioning notification, and only needs to read or obtain the indication information.

In an optional implementation, before S307, the SF may further obtain a sensing role indication of the terminal device from the terminal device. Therefore, in S307, the SF may further determine the transmitter of the sensing signal of the first sensing service based on the sensing role indication of the terminal device. It may also be understood that, in S307, the SF may obtain the stored indication information of the terminal device, where the indication information may indicate that the terminal device is allowed to serve as the transmitter of the sensing signal. In other words, S307 may not include an action of determining the indication information by the SF based on the positioning permission subscribed by the terminal and/or the feedback of the positioning notification. For example, the sensing role indication of the transmitter of the sensing signal of the first sensing service that is determined by the SF in S307 may indicate that the terminal device is allowed to serve as the transmitter of the sensing signal.

For a manner in which the SF obtains the sensing role indication of the terminal device, refer to FIG. 9, or refer to descriptions in another embodiment of this application. Details are not described again.

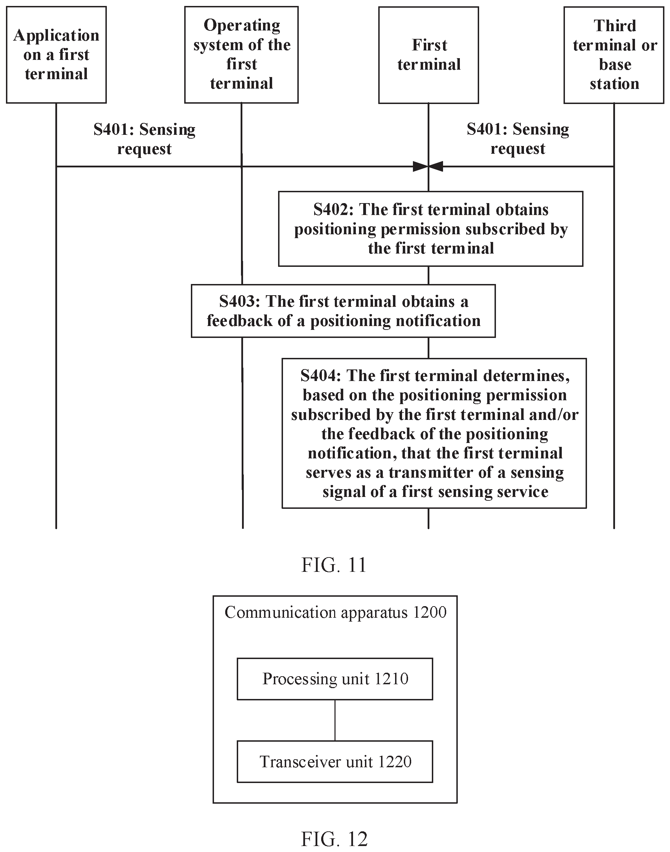

FIG. 11 is an example of a procedure when the method in FIG. 5 is implemented by a terminal device. In FIG. 11, an example in which the terminal device is a first terminal is used. Based on a requirement of an implementation scenario, the first terminal may alternatively be replaced with another terminal or device. In addition, for a same sensing service, the procedure shown in FIG. 11 may alternatively be performed by a plurality of different terminals.

As shown in FIG. 11, the procedure may include the following steps:
S401: A first terminal receives a sensing request. The sensing request may be from an initiator of a sensing service, for example, another terminal device (for example, a third terminal), a base station, or an application on the first terminal.

The sensing request is used to request a first sensing service.

The first terminal may determine, based on the sensing request, that a mode of the first sensing service is that the terminal device serves as a transmitter of a sensing signal. For example, the sensing request may include mode information of a sensing service requirement, or the sensing service requirement in the sensing request may be used to determine a sensing mode. The first terminal may further determine, based on the sensing request, that the first terminal serves as the transmitter of the sensing signal. For example, the sensing request may indicate or request the first terminal to serve as the transmitter of the sensing signal of the first sensing service.

It may be understood that S401 may be used as an example implementation of step S101 in the procedure in FIG. 5.

The first terminal may be triggered, based on the sensing request, to perform S402 and/or S403. For example, if the first terminal determines, based on the sensing request, that the terminal device serves as the transmitter of the sensing signal, or the first terminal itself serves as the transmitter of the sensing signal, the first terminal triggers performing of S402 and/or S403. For another example, the first terminal may trigger performing of S202 and/or S203 based on the sensing request. To be specific, when the sensing request is obtained, S202 and/or S203 are triggered by default, and that the terminal device serves as the transmitter of the sensing signal or the first terminal itself serves as the transmitter of the sensing signal is not predetermined.

S402: The first terminal obtains positioning permission subscribed by the first terminal.

The first terminal may store the subscribed positioning permission. For example, the positioning permission subscribed by the first terminal is configured by default in configuration information of the first terminal, or when the subscription information is reported, the first terminal may store the positioning permission subscribed by the first terminal. Therefore, in S402, the first terminal may obtain the subscribed positioning permission locally.

S403: The first terminal obtains a feedback of a positioning notification.

With reference to the descriptions of a manner in which the terminal device obtains the feedback of the positioning notification in this application, in S403, the first terminal may trigger the positioning notification and obtain the feedback of the positioning notification.

As described in this application, the first terminal may trigger the positioning notification, to request a user to reply that location information is agreed or not agreed to be obtained. The first terminal may determine the feedback of the positioning notification based on an operation feedback of the user, where the feedback of the positioning notification may indicate that the location information of the first terminal is agreed to be obtained.

In a possible implementation, S403 may be performed based on S402. For example, in S402, when the positioning permission subscribed by the first terminal includes third subscription positioning information indicating that the first terminal needs to feed back agreement when the location information of the first terminal is obtained, the first terminal triggers S403, to obtain the feedback of the positioning notification of the first terminal.

S404: The first terminal determines, based on the positioning permission subscribed by the first terminal and/or the feedback of the positioning notification, that the first terminal serves as the transmitter of the sensing signal of the first sensing service.

S404 may be used as an example of S102. For example, in S404, if the first terminal determines that the location information of the first terminal is allowed to be obtained, and/or the first terminal is allowed to serve as the transmitter of the sensing signal, the first terminal may serve as the transmitter of the sensing signal of the first sensing service.

It may be understood that, if the first terminal determines, based on the subscribed positioning permission and/or the feedback of the positioning notification, that the first terminal does not support or is not allowed to serve as the transmitter of the sensing signal, the first sensing service may be ended, for example, a service failure message is sent. Alternatively, the first terminal may change a sensing mode, for example, use a sensing mode in which a network device serves as the transmitter of the sensing signal, for example, send the sensing request to the network device.

In FIG. 11, the terminal device may trigger, based on the sensing request, obtaining of the positioning permission subscribed by the terminal device and/or the feedback of the positioning notification, and determine, based on the positioning permission subscribed by the terminal device and/or the feedback of the positioning notification, whether the terminal device can serve as the transmitter of the sensing signal, to properly determine the transmitter of the sensing signal.

In an optional implementation, before S404, the first terminal may further obtain a sensing role indication of the first terminal, so that in S404, the first terminal may further determine, based on the sensing role indication of the first terminal, the transmitter of the sensing signal of the first sensing service. For example, in S404, the sensing role indication of the first terminal may indicate that the terminal device is allowed to serve as the transmitter of the sensing signal, and the first terminal may serve as the transmitter of the sensing signal of the first sensing service.

For example, when determining that a sensing capability needs to be reported, the first terminal may trigger a sensing role request via an operating system. The operating system of the first terminal may detect the operation feedback of the user, and determine a response message of a sensing role request based on the operation feedback. The operating system of the first terminal may further send the response message to the first terminal, to indicate the user to reply that the first terminal is agreed or not agreed to serve as the transmitter of the sensing signal. The first terminal may determine the sensing role indication based on the response message of the sensing role request.

It may be understood that, to implement functions in the foregoing embodiments, the base station and the terminal include corresponding hardware structures and/or software modules for performing the functions. A person skilled in the art should be easily aware that, in this application, units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

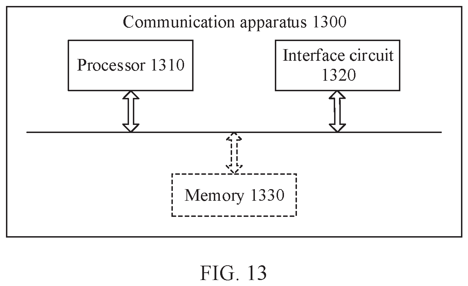

FIG. 12 and FIG. 13 are diagrams of structures of possible communication apparatuses according to embodiments of this application. These communication apparatuses may be configured to implement functions of the sensing device or the terminal device (for example, the first terminal) in the foregoing method embodiments, and therefore can also implement beneficial effects of the foregoing method embodiments. In embodiments of this application, the communication apparatus may be a sensing device or a terminal device (for example, a first terminal), or may be a component, for example, a functional module or a chip, used in the foregoing module or network element.

As shown in FIG. 12, a communication apparatus 1200 includes a processing unit 1210 and a transceiver unit 1220. The communication apparatus 1200 is configured to implement actions of the sensing device, the SF, the terminal device, or the first terminal in the method embodiment shown in any one of FIG. 5 to FIG. 10.

When the communication apparatus 1200 is configured to implement the function of the sensing device in the method embodiment shown in FIG. 5, the transceiver unit 1220 may be configured to receive a sensing request. The processing unit 1210 may be configured to determine, based on positioning permission of the first terminal and/or a sensing role indication of the first terminal, that the first terminal serves as a transmitter of a sensing signal of the first sensing service.

The processing unit 1210 may be further configured to perform other actions than receiving and/or sending actions related to the SF, the terminal device, or the first terminal in FIG. 6 to FIG. 10. The transceiver unit 1220 may be further configured to perform receiving and/or sending actions related to the SF, the terminal device, or the first terminal in FIG. 6 to FIG. 10.

For more detailed descriptions of the processing unit 1210 and the transceiver unit 1220, refer to related descriptions in the method embodiment shown in any one of FIG. 5 to FIG. 10.

As shown in FIG. 13, a communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to store instructions executed by the processor 1310, store input data required by the processor 1310 to run the instructions, or store data generated after the processor 1310 runs the instructions. When the communication apparatus 1300 is configured to implement the method shown in FIG. 5, the processor 1310 is configured to implement a function of the processing unit 1210, and the interface circuit 1320 is configured to implement a function of the transceiver unit 1220.

When the communication apparatus is a chip used in a sensing device or a terminal device, the chip implements functions of the sensing device or the terminal device in the foregoing method embodiments. The chip may receive, via another module (for example, a communication interface) in the sensing device or the terminal device, information sent by another network element or device to the sensing device or the terminal device, or send information to another module (for example, a communication interface) in the sensing device or the terminal device. The information is sent by the sensing device or the terminal device to another network element or device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, the storage medium is coupled to the processor, so that the processor can read information from the storage medium and write information into the storage medium. The storage medium may alternatively be a component of the processor. The processor and the storage medium may be disposed in the ASIC. In addition, the ASIC may be located in a sensing device or a terminal device. The processor and the storage medium may alternatively exist in the sensing device or the terminal device as discrete components.

An embodiment of this application further provides a communication system, including an apparatus in one or more devices or corresponding devices in the sensing device (for example, the SF or the first terminal) or the terminal device configured to implement the foregoing method embodiments, to implement any method in FIG. 5 to FIG. 10.

An embodiment of this application further provides a computer-readable storage medium. The computer-readable storage medium is configured to store a computer program or instructions. When the computer program or the instructions are run, the method shown in the foregoing method embodiments is implemented.

An embodiment of this application further provides a computer program product. When the computer program product runs on a computer, the method shown in the foregoing method embodiments is implemented.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a special-purpose computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
receiving a sensing request, wherein the sensing request is used to request a first sensing service; and
determining, based on positioning permission of a first terminal and/or a sensing role indication of the first terminal, that the first terminal serves as a transmitter of a sensing signal of the first sensing service, wherein the positioning permission of the first terminal is used to determine that location information of the first terminal is allowed to be obtained, and the sensing role indication indicates that the first terminal is allowed to serve as the transmitter of the sensing signal.

2. The method according to claim 1, wherein the method further comprises:
sending a sensing control request to the first terminal, wherein the sensing control request indicates to send the sensing signal of the first sensing service.

3. The method according to claim 1, wherein the method further comprises:
sending the sensing signal of the first sensing service.

4. The method according to any one of claims 1 to 3, wherein before determining, based on the positioning permission of the first terminal, that the first terminal serves as the transmitter of the sensing signal of the first sensing service, the method further comprises:
determining a sensing mode based on the sensing request, wherein the sensing mode is sending the sensing signal via a terminal.

5. The method according to any one of claims 1 to 4, wherein the method further comprises:
obtaining the positioning permission of the first terminal, wherein the positioning permission of the first terminal comprises at least one of the following:
a feedback of a positioning notification, wherein the positioning notification is used to request the first terminal or a user of the first terminal to reply that the location information is agreed or not agreed to be obtained;
positioning permission subscribed by the first terminal; and
indication information indicating that the location information of the first terminal is allowed to be obtained, wherein the indication information is determined based on the positioning permission subscribed by the first terminal and/or the feedback of the positioning notification.

6. The method according to claim 5, wherein the positioning permission of the first terminal comprises the indication information, and obtaining the positioning permission of the first terminal comprises:
obtaining the positioning permission subscribed by the first terminal and/or the feedback of the positioning notification; and
determining the indication information based on the positioning permission subscribed by the first terminal and/or the feedback of the positioning notification.

7. The method according to claim 5 or 6, wherein obtaining the feedback of the positioning notification comprises:
sending the positioning notification; and
obtaining the feedback of the positioning notification based on a first response message of the positioning notification.

8. The method according to claim 7, wherein sending the positioning notification comprises:
sending the positioning notification to the first terminal through an access and mobility management network element; and
the method further comprises:
receiving the first response message from the access and mobility management network element, wherein the first response message indicates that the first terminal or the user of the first terminal replies that the location information is agreed to be obtained, the first terminal or the user of the first terminal replies that the location information is not agreed to be obtained, the user has no operation feedback, or the first terminal does not reply to the positioning notification.

9. The method according to claim 8, wherein the method further comprises:
receiving, by the access and mobility management network element, the positioning notification;
sending, by the access and mobility management network element, the positioning notification to the first terminal; and
sending, by the access and mobility management network element, the first response message based on a second response message of the first terminal for the positioning notification or based on a case in which the second response message of the positioning notification is not received within predetermined time, wherein the second response message indicates that the first terminal or the user of the first terminal replies that the location information is agreed to be obtained, the first terminal or the user of the first terminal replies that the location information is not agreed to be obtained, or the user has no operation feedback.

10. The method according to any one of claims 5 to 9, wherein the positioning permission of the first terminal comprises the positioning permission subscribed by the first terminal, and obtaining the positioning permission of the first terminal comprises:
obtaining, from the data management function network element, the positioning permission subscribed by the first terminal.

11. The method according to claim 10, wherein before determining that the first terminal serves as the transmitter of the sensing signal of the first sensing service, the method further comprises:
obtaining sensing capability information of the first terminal from the first terminal, wherein the sensing capability information indicates that the first terminal supports serving as the transmitter of the sensing signal.

12. The method according to claim 10 or 11, wherein obtaining, from the data management function network element, the positioning permission subscribed by the first terminal comprises:
sending a request for obtaining the subscribed positioning permission to the data management function network element, wherein the request for obtaining the subscribed positioning permission comprises an identifier of the first terminal; and
receiving, from the data management function network element, the positioning permission subscribed by the first terminal.

13. The method according to claim 12, wherein the method further comprises:
receiving, by the data management function network element, the request for obtaining the subscribed positioning permission;
determining, by the data management function network element based on the identifier of the first terminal, the positioning permission subscribed by the first terminal; and
sending, by the data management function network element, the positioning permission subscribed by the first terminal.

14. The method according to any one of claims 5 to 13, wherein the positioning permission of the first terminal comprises the feedback of the positioning notification, and obtaining the positioning permission of the first terminal comprises:
triggering the positioning notification;
obtaining an operation feedback for the positioning notification; and
determining the feedback of the positioning notification based on the operation feedback.

15. The method according to any one of claims 1 to 14, wherein the method further comprises:
obtaining the sensing role indication from the first terminal.

16. The method according to claim 15, wherein the method further comprises:
receiving, by the access and mobility management network element, the sensing role indication from the first terminal; and
sending, by the access and mobility management network element, the sensing role indication.

17. The method according to any one of claims 1 to 16, wherein the sensing role indication is carried in a registration request of the first terminal.

18. The method according to any one of claims 1 to 17, wherein determining, based on the positioning permission of the first terminal and/or the sensing role indication of the first terminal, that the first terminal serves as the transmitter of the sensing signal of the first sensing service comprises:
determining, from a plurality of second terminals based on positioning permission of the plurality of second terminals and/or sensing role indications of the plurality of second terminals, that the first terminal serves as the transmitter of the sensing signal of the first sensing service, wherein the positioning permission of the second terminal indicates that location information is allowed or not allowed to be obtained, and the sensing role indication of the second terminal indicates that the second terminal is allowed or not allowed to serve as the transmitter of the sensing signal.

19. The method according to any one of claims 1 to 18, wherein the positioning permission of the first terminal corresponds to a location and/or time; and
determining that the first terminal serves as the transmitter of the sensing signal of the first sensing service further comprises:
determining, based on information about the location of the first terminal and/or information about the time of the sensing request, that the first terminal serves as the transmitter of the sensing signal of the first sensing service.

20. A communication method, comprising:
receiving a positioning notification, wherein the positioning notification is used to request a first terminal or a user of the first terminal to reply that location information is agreed or not agreed to be obtained;
triggering a feedback request for the positioning notification based on the positioning notification, wherein the feedback request for the positioning notification is used to request the user to reply that the location information is agreed or not agreed to be obtained; and
sending a response message based on an operation feedback of the user on the feedback request for the positioning notification or based on no operation feedback of the user, wherein the response message indicates that the first terminal or the user replies that the location information is agreed to be obtained, the location information is not agreed to be obtained, or the user has no operation feedback.

21. A communication method, comprising:
obtaining a sensing role indication, wherein the sensing role indication indicates that the first terminal is allowed to serve as a transmitter of a sensing signal; and
sending the sensing role indication.

22. The method according to claim 21, wherein obtaining the sensing role indication comprises:
triggering a sensing role request, wherein the sensing role request is used to request a user to reply that the first terminal is agreed to serve as the transmitter of the sensing signal;
obtaining an operation feedback of the sensing role request; and
determining the sensing role indication based on the operation feedback.

23. The method according to claim 21 or 22, wherein the sensing role indication is carried in a registration request of the terminal.

24. A communication apparatus, comprising a unit or module configured to perform the method according to any one of claims 1 to 19, or comprising a unit or module configured to perform the method according to claim 20, or comprising a unit or module configured to perform the method according to any one of claims 21 to 23.

25. A communication apparatus, comprising a processor, wherein the processor is configured to execute a computer program or instructions, to implement the method according to any one of claims 1 to 19, or implement the method according to claim 20, or implement the method according to any one of claims 21 to 23.

26. A computer-readable storage medium, wherein the storage medium stores a computer program or instructions, and when the computer program or the instructions are executed by a communication apparatus, the method according to any one of claims 1 to 19 is implemented, or the method according to claim 20 is implemented, or the method according to any one of claims 21 to 23 is implemented.

27. A computer program product, wherein when the computer program product is executed by a computer, the computer is caused to perform the method according to any one of claims 1 to 19, or to perform the method according to claim 20, or to perform the method according to any one of claims 21 to 23.

28. A communication system, comprising:
a sensing device, configured to perform the method according to any one of claims 1 to 19; and
a terminal device, configured to perform the method according to any one of claims 20 to 23.
